# EUROPEAN PATENT SPECIFICATION

(11) **EP 3 564 134 B1**
(45) Date of publication and mention of the grant of the patent: **21.02.2024**
(21) Application number: 19163759.4
(22) Date of filing: 19.03.2019
(51) Int. Cl.: B64F 5/10, B21J 15/14, B23Q 9/00

(54) **FLEXIBLE TRACK MANUFACTURING SYSTEM AND METHOD**
SYSTEM UND VERFAHREN ZUR HERSTELLUNG EINER FLEXIBLEN KETTE
SYSTÈME ET PROCÉDÉ DE FABRICATION DE PISTE FLEXIBLE

(30) Priority: 26.04.2018 US 201815963148; 23.05.2018 NL 2020976
(43) Date of publication of application: 06.11.2019
(73) Proprietor: The Boeing Company, Arlington, VA 22202 (US)
(72) Inventor: CHAN, Kwok Tung, Chicago, IL 60606-1596 (US); SISCO, Tanni, Chicago, IL 60606-1596 (US); REID, Eric M., Chicago, IL 60606-1596 (US); DEVLIN, Jeffrey M., Chicago, IL 60606-1596 (US)
(74) Representative: Duxbury, Stephen

(56) References cited:
- EP-A2- 0 917 920
- EP-A2- 2 564 989
- WO-A1-2011/062594
- DE-A1-102006 001 385
- US-A1- 2003 116 331
- US-B2- 8 365 376

## Description

### BACKGROUND INFORMATION

### 1. Field:

The present disclosure relates generally to a manufacturing system and, in particular, to a method, an apparatus, and a system for performing manufacturing operations using a flexible track manufacturing system.

### 2. Background:

Manufacturing an aircraft can involve assembling large numbers of components to form the aircraft. For example, an aircraft in the form of a midsize commercial jetliner may have millions of parts that are manufactured and assembled to form the jetliner.

Assembling parts into structures that include assemblies and subassemblies may be performed using fastener systems. Factory level automation for aircraft assembly includes the automated drilling of holes and insertion of fasteners. For example, the joining of different sections of a fuselage for an aircraft may be automated utilizing equipment such as robotic arms and flex track crawlers.

The fuselage of an aircraft may comprise a monocoque or semi-monocoque shell in which a series of hoop-wise frames in the shape of the fuselage cross sections are attached to longitudinal stringers. This structure is covered with a skin material. Most modern large aircraft use several large fuselage sections, which are joined by fastening, riveting, or bonding to form the complete fuselage for the aircraft.

Tracks systems may be attached to the inner mold line side or outer mold line side of the fuselage section. With this type of system, a single track or a dual track can be attached to the surface of the fuselage. These types of tracks are often attached to the surface of the fuselage using a vacuum system in which vacuum cups connected to the tracks apply a vacuum to hold the tracks on the surface of the fuselage. A robot, such as a crawler robot, is connected to the tracks and moves along the tracks to perform manufacturing operations such as drilling holes and installing fasteners.

Currently used track systems, however, are unable to maintain a constant distance to the surface of the fuselage in sections of the fuselage that curve. Some fastener installation systems require a specific distance or offset from the surface of the fuselage to install fasteners. When the distance changes beyond the specified height, fasteners may not be installed or may not be installed correctly.

Therefore, it would be desirable to have a method and apparatus that take into account at least some of the issues discussed above, as well as other possible issues. For example, it would be desirable to have a method and apparatus that overcome a technical problem with attaching a track system that maintains a desired distance from the surface of a structure on which manufacturing operations are performed.

In accordance with its abstract, EP 0917920 A2 states: ' The present invention relates to a portable process for automated fastening of aircraft structures. The invention will employ two primary elements for locating and installing through-the-skin fasteners. Inside and outside units are attached onto an airframe and indexed to each other through coordination holes that have been pre-drilled through the structure. The aircraft structure is assembled with the pre-drilled coordination holes by aligning adjacent airframe parts and inserting alignment pins. The alignment pins will provide a degree of clamping to pull the parts together and provide indexing for inside and outside vacuum attachment track systems. The invention is equipped to traverse along the track system, accurately position itself, and drill only or countersink a hole, insert a fastener, and fasten, i.e., upset a rivet, or run down a threaded nut, then reposition itself to the next fastener location and repeat the process.'

In accordance with its abstract, EP 2564989A2 states: It is disclosed an apparatus for supporting a manufacturing tool relative to a workpiece , the apparatus comprising a track assembly (410) adapted to be attached to the workpiece and including at least one rail, the rail having a longitudinally-extending neutral axis and a rack extending along a pitch line that at least approximately coincides with the longitudinally-extending neutral axis.

### SUMMARY

A system and a method according to independent claims 1 and 9 respectively are provided. Dependent claims define further embodiments.

### BRIEF DESCRIPTION OF THE DRAWINGS

The novel features believed characteristic of the present disclosure are set forth in the appended claims. The illustrative examples however, as well as a preferred mode of use, further objectives and features thereof, will best be understood by reference to the following detailed description of the present disclosure when read in conjunction with the accompanying drawings, wherein:
**Figure 1** is an illustration of a block diagram of a manufacturing environment in accordance with the present disclosure;
**Figure 2** is an illustration of a manufacturing environment in accordance with the present disclosure;
**Figure 3** is an illustration of an enlarged view of a vacuum track manufacturing system in accordance with the present disclosure;
**Figure 4** is an illustration of a cross-sectional view of a vacuum track manufacturing system attached to a fuselage section in accordance with the present disclosure;
**Figure 5** is an illustration of a cross-sectional view of a vacuum track manufacturing system attached to a fuselage section in accordance with the present disclosure;
**Figure 6** is an illustration of components in a flexible track system in accordance with the present disclosure;
**Figure 7** is an illustration of an enlarged view of a track clamp in accordance with the present disclosure;
**Figure 8** is an illustration of another mechanism for setting an angle for a flexible track in accordance with the present disclosure;
**Figure 9** is an illustration of an implementation for a positioning system in accordance with the present disclosure;
**Figure 10** is an illustration of a support system for positioning a portion of a flexible track system and a crawler robot in accordance with the present disclosure;
**Figure 11** is an illustration of a manufacturing environment in accordance with the present disclosure;
**Figure 12** is an illustration of a flowchart of a process for moving a crawler robot in a surface of a structure in accordance with the present disclosure;
**Figure 13** is an illustration of a flowchart of a process for installing a flexible track system in accordance with the present disclosure;
**Figures 14A** and **14B** are illustrations of a flowchart of a process for deploying a vacuum track manufacturing system in accordance with the present disclosure;
**Figure 15** is an illustration of a flowchart of a process for forming manufacturing operations in accordance with the present disclosure;
**Figure 16** is an illustration of a block diagram of an aircraft manufacturing and service method in accordance with the present disclosure;
**Figure 17** is an illustration of a block diagram of an aircraft in which the present disclosure may be implemented; and
**Figure 18** is an illustration of a block diagram of a product management system in accordance with the present disclosure.

### DETAILED DESCRIPTION

The illustrative embodiments recognize and take into account one or more different considerations. For example, the illustrative embodiments recognize and take into account that currently used track systems may have flexible tracks. However, the illustrative embodiments recognize and take into account that the current framework connecting the flexible tracks to the curved surface, however, are not selectable to take into account the contour in the surface of the structure.

The illustrative embodiments also recognize and take into account that the angle at which the tracks are held by the framework in a track system also does not take into account maintaining a desired angle for the flexible tracks with respect to the surface of the structure. For example, the illustrative embodiments recognize and take into account that with currently used fastener installation systems, the tool on a crawler robot operates with the tool being substantially perpendicular to the surface of the structure. When that angle deviates more than some threshold amount, the fasteners cannot be installed by the crawler robot.

Thus, the illustrative embodiments provide a method, an apparatus, and a system for a vacuum track manufacturing system. In one illustrative example, a vacuum track manufacturing system comprises flexible tracks, vacuum units, and a variable height base system. The variable height base system connects the vacuum cup system and the flexible tracks to each other. The variable height base system has heights that are selected to maintain a desired distance between the flexible tracks and a surface of a structure to which the vacuum cup system is attached.

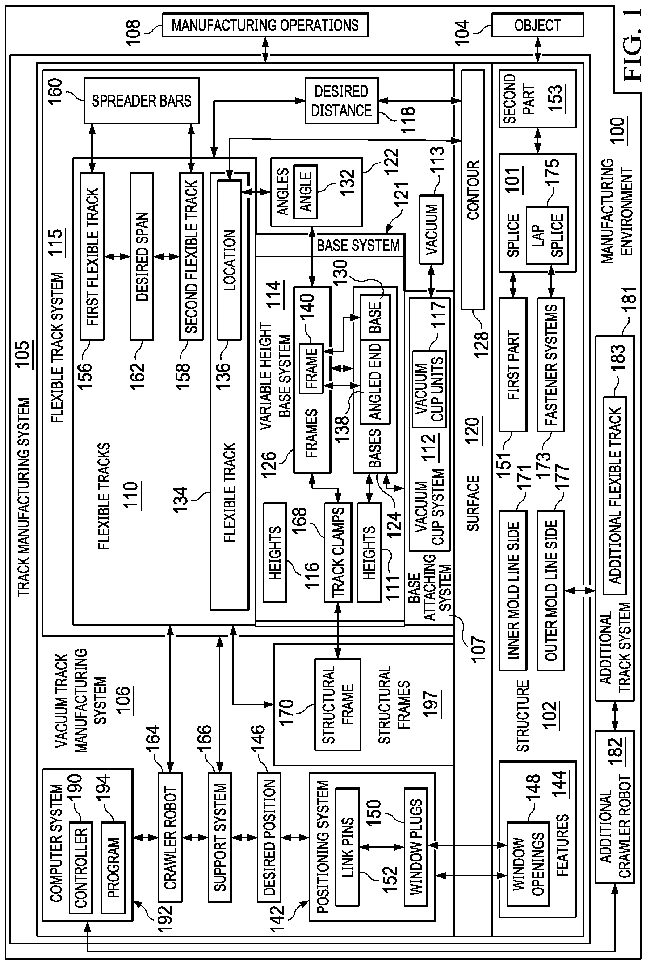

With reference now to the figures and, in particular, with reference to **Figure 1****,** an illustration of a block diagram of a manufacturing environment is depicted in accordance with the present disclosure. Manufacturing environment **100** is an environment in which structure **102** can be manufactured for object **104** using track manufacturing system **105.**

In the illustrative example, structure **102** can take a number of different forms. For example, structure **102** can be selected from a group comprising an assembly, a sub-assembly, a fuselage section, a wing, a wing box, a horizontal stabilizer, a landing gear system, a hydraulic system, a skin panel, a stringer, a fuselage section, a composite fuselage section, and other suitable structures.

Object **104** may take a number of different forms. For example, object **104** may be, for example, a mobile platform, a stationary platform, a land-based structure, an aquatic-based structure, and a space-based structure. More specifically, object **104** can be a surface ship, an aircraft, a tank, a personnel carrier, a train, a spacecraft, a space station, a satellite, a submarine, an automobile, a power plant, a bridge, a dam, a house, a manufacturing facility, a building, and other suitable types of objects.

In this illustrative example, track manufacturing system **105** operates to perform manufacturing operations **108** to manufacture structure **102.** Manufacturing operations **108** can take a number of different forms. For example, manufacturing operations **108** can be selected from at least one of drilling, machining, performing inspections, painting, applying sealant, cutting, installing fasteners, or other types of manufacturing operations **108** performed to manufacture structure **102.**

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

For example, without limitation, "at least one of item A, item B, or item C" may include item A, item A and item B, or item C. This example also may include item A, item B, and item C or item B and item C. Of course, any combinations of these items may be present. In some illustrative examples, "at least one of" may be, for example, without limitation, two of item A; one of item B; and ten of item C; four of item B and seven of item C; or other suitable combinations.

In this illustrative example, vacuum track manufacturing system **106** includes a number of different components. As depicted, track manufacturing system **105** comprises flexible tracks **110,** base attaching system **107,** and base system **121,** which form flexible track system **115** for track manufacturing system **105.** In this illustrative example, base attaching system **107** can be vacuum cup system **112** with track manufacturing system **105** being vacuum track manufacturing system **106.** In other examples, base attaching system **107** can take other forms other than vacuum cup system **112** using vacuum **113.** For example, base attaching system **107** can be attached to structure **102** using at least one of fasteners that engage slots or holes in structure **102,** clamps, or other suitable attachment mechanisms that can be used to attach flexible track system **115** to surface **120** of structure **102.**

Base system **121** is configured to maintain desired distance **118** between flexible tracks **110** and surface **120** of structure **102.** In this illustrative example, base system **121** connects vacuum cup system **112** and flexible tracks **110** to each other. Vacuum cup system **112** attaches flexible track system **115** to surface **120** of structure **102** when vacuum **113** is applied by vacuum cup system **112.** In the depicted example, vacuum cup system **112** comprises vacuum cup units **117.** As depicted, base system **121** includes variable height base system **114,** which is connected to vacuum cup system **112** and flexible tracks **110.** Base system **121** is configured in a manner in which base system **121** enables flexible tracks **110** to bridge structural frames **197** on surface **120** of structure **102.** Structure frames **197** can include at least one of stringers, frames, intercostals, hoop frames, ribs, or other structural elements for structure **102.** Structural frames **197** can be located on inner mold line side **171,** outer mold line side **177,** or both.

Base system **121** is configured to maintain desired distance **118** between flexible tracks **110** and surface **120** of structure **102** with contour **128** to which vacuum cup system **112** is attached.

In this illustrative example, variable height base system **114** has heights **116** that are selected to maintain desired distance **118** between flexible tracks **110** and surface **120** of structure **102** to which vacuum cup units **117** in vacuum cup system **112** are attached when vacuum **113** is applied. In the illustrative example, desired distance **118** can be the same over the entire length of flexible tracks **110.** In other illustrative examples, desired distance **118** may vary depending on stations for tools used to perform manufacturing operations **108** at different locations along the length of flexible track system **115.**

Further, variable height base system **114** can also be configured to set angles **122** for flexible tracks **110** relative to surface **120** of structure **102.** In the illustrative example, surface **120** can be of an inner mold line (IML) side and an outer mold line (OML) side of structure **102.**

In the illustrative example, variable height base system **114** is comprised of a number of different components. As depicted, variable height base system **114** comprises bases **124** and frames **126.** Frames **126** are connected to bases **124** and flexible tracks **110.** Bases **124** are connected to vacuum cup system **112.**

As used herein, a first component, frame **140** in frames **126,** "connected to" a second component, base **130** in bases **124,** means that the first component can be connected directly or indirectly to the second component. In other words, additional components may be present between the first component and the second component. The first component is considered to be indirectly connected to the second component when one or more additional components are present between the two components. When the first component is directly connected to the second component, no additional components are present between the two components.

Bases **124** have heights **111** selected to maintain flexible tracks **110** at desired distance **118** from surface **120** of structure **102.** Desired distance **118** may be such that flexible tracks **110** match contour **128** of structure **102.** Contour **128** is for surface **120** of structure **102.** In the illustrative example, flexible tracks **110** are configured to bend to correspond to contour **128** in surface **120** of structure **102.** In this example, flexible tracks **110** are configured to bend to correspond to contour **128** of surface **120** of structure **102** such that crawler robot **164** properly performs manufacturing operations **108.**

In one illustrative example, base **130** in bases **124** is configured to set angle **132** for flexible track **134** in flexible tracks **110** connected to base **130** such that flexible track **134** matches contour **128** of structure **102** at location **136** for flexible track **134.** In other words, flexible track **134** has a track contour that matches contour **128.** In the illustrative example, the match is present when two contours are substantially the same or close enough to provide a desired level of performance in performing manufacturing operations **108.**

Base **130** can set angle **132** in a number of different ways. For example, base **130** can have angled end **138** connected to frame **140,** wherein angled end **138** has angle **132** that causes flexible track **134** to match contour **128** of structure **102** at location **136** of flexible track **134** on structure **102.**

In another illustrative example, frame **140** in frames **126** is rotatably connected to base **130** to set angle **132** for flexible track **134** connected to frame **140.** Angle **132** can be set in a manner that causes flexible track **134** to match contour **128** of structure **102** at location **136** of flexible track **134** on structure **102.**

Vacuum track manufacturing system **106** can also comprise positioning system **142.** In the illustrative example, positioning system **142** extends from variable height base system **114** and is configured to connect to a group of features **144** for structure **102** to position flexible track system **115** in desired position **146** on structure **102** for properly performing manufacturing operations **108.** As used herein, "a group of," when used with reference to items, means one or more items. For example, "a group of features **144"** is one or more of features **144.** Further, positioning system **142** also can provide support for flexible tracks **110** in case a vacuum loss occurs in vacuum cup system **112** while vacuum cup system **112** is attached to surface **120** of structure **102.**

In one illustrative example, the group of features **144** comprises a group of window openings **148** in structure **102.** Positioning system **142** in this example comprises a group of window plugs **150** and link pins **152** that connect the group of window plugs **150** to the variable height base system **114,** and wherein flexible track **134** has desired position **146** on surface **120** of structure **102** when the group of window plugs **150** is connected to window openings **148.**

Further, flexible tracks **110** may comprise first flexible track **156** and second flexible track **158** that are parallel to each other. Spreader bars **160** may be configured to connect first flexible track **156** and second flexible track **158** to each other such that desired span **162** is present between first flexible track **156** and second flexible track **158.** In this illustrative example, desired span **162** may be the same throughout the length of first flexible track **156** and second flexible track **158.** In this example, desired span **266** allows crawler robot **164** to properly move along flexible tracks **110** in flexible track system **115.** If desired span **266** is absent, crawler robot **164** may be unable to move along the entire length of flexible tracks **110** as desired.

Flexible track system **115** can also include a number of track clamps **168.** The number of track clamps **168** are connected to frames **126.** For example, the number of track clamps **168** can be connected to frames **126** for second flexible track **158.** The number of track clamps **168** is configured to clamp features, such as structural frame **170** on structure **102.** The use of the number of track clamps **168** increases track rigidity. Additionally, the number of track clamps **168** can secure second flexible track **158** to structure **102** while first flexible track **156** is secured to structure **102** by positioning system **142.**

Structure **102** may have splice **101.** When splice **101** is present, flexible track system **115** can be placed such that first flexible track **156** and second flexible track **158** in flexible tracks **110** are positioned in parallel to splice **101** in structure **102.** As depicted, the positioning can be set using link pins **152** for window plugs **150.** The placement of first flexible track **156** and second flexible track **158** in flexible tracks **110** can be made such that a splice plate, butt splice, or other splicing feature in splice **101** are between flexible tracks **110.** In this example, first flexible track **156** and second flexible track **158** are in parallel with splice **101.**

In this illustrative example, vacuum track manufacturing system **106** further comprises crawler robot **164.** In this particular example, crawler robot **164** is configured to move along flexible tracks **110** and perform manufacturing operations **108.**

As depicted, support system **166** can be configured to position crawler robot **164** on flexible tracks **110.** Support system **166** can also be configured to position flexible track system **115** at desired position **146** to be attached to surface **120** of structure **102** at desired position **146.** The positioning by support system **166** can be for at least one of crawler robot **164** or flexible track system **115** at desired position **146.**

In one illustrative example, flexible track system **115** and crawler robot **164** are located on inner mold line side **171** of structure **102.** Vacuum track manufacturing system **106** also comprises additional track system **181** located on outer mold line side **177** of structure **102** and additional crawler robot **182** configured to move along additional flexible track **183** in additional track system **181** and perform manufacturing operations **108.**

As depicted, vacuum track manufacturing system **106** also may include controller **190.** In this illustrative example, controller **190** is configured to control the operation of crawler robot **164** and additional crawler robot **182.** For example, controller **190** can coordinate the operation of crawler robot **164** and additional crawler robot **182** to perform manufacturing operations **108** on structure **102.** This coordination may be performed to install fastener systems **173.**

In one illustrative example, controller **190** can coordinate the operation while crawler robot **164** is on inner mold line side **171** and additional crawler robot **182** is on outer mold line side **177.** In this example, additional crawler robot **182** is an outer crawler robot and can perform operations comprising at least one of drilling, countersinking the fastener holes, and applying sealant to the bolts in fastener systems **173** prior to driving the bolts into holes. In this depicted example, crawler robot **164** is an inner crawler robot and can perform operations including installing collars or nuts in fastener systems **173** on the bolts fastener systems **173** to complete fastener system installation.

As depicted, the coordination of these operations between the outer crawler robot and the inner crawler robot to make sure that the collar or nut is installed after the fastener is driven into the hole is performed using controller **190.** As depicted, one crawler robot may be the slave of the other crawler robot. In other examples, sensors may be used to detect when bolts in faster systems **173** penetrate structure **102** through inner mold line side **171** and then locate and install collars or nuts. Either or both of these types of coordination may be employed. Further, controller **190** can coordinate the outer crawler robot to hold a bolt (installed in the hole) while the inner crawler robot installs a collar or nut. These and other types of coordination between the two crawler robots may be made using controller **190.**

As depicted, controller **190** can be implemented in at least one of software or hardware. When software is used, the operations performed by controller **190** may be implemented in program code configured to run on hardware, such as a processor unit. When firmware is used, the operations performed by controller **190** may be implemented in program code and data and stored in persistent memory to run on a processor unit. When hardware is employed, the hardware may include circuits that operate to perform the operations in controller **190.**

In the illustrative examples, the hardware may take a form selected from at least one of a circuit system, an integrated circuit, an application specific integrated circuit (ASIC), a programmable logic device, or some other suitable type of hardware configured to perform a number of operations. With a programmable logic device, the device may be configured to perform the number of operations. The device may be reconfigured at a later time or may be permanently configured to perform the number of operations. Programmable logic devices include, for example, a programmable logic array, a programmable array logic, a field programmable logic array, a field programmable gate array, and other suitable hardware devices. Additionally, the processes may be implemented in organic components integrated with inorganic components and may be comprised entirely of organic components excluding a human being. For example, the processes may be implemented as circuits in organic semiconductors. An organic semiconductor is a semiconductor that is comprised of materials such as pi-bonded molecules or polymers made of carbon and hydrogen and may include other elements such as nitrogen, sulfur, and oxygen. These materials are in the form of molecular crystals or amorphous thin films.

Computer system **192** is a physical hardware system and includes one or more data processing systems. When more than one data processing system is present, those data processing systems are in communication with each other using a communications medium. The communications medium may be a network. The data processing systems may be selected from at least one of a computer, a server computer, a tablet, or some other suitable data processing system.

Controller **190** controls the operation of vacuum track manufacturing system **106** and, in particular, crawler robot **164** and additional crawler robot **182** in vacuum track manufacturing system **106** utilizing program **194.** Program **194** may be, for example, a computer numerical control (CNC) program or some other suitable program code that may be used to control the operation of vacuum track manufacturing system **106.** For example, crawler robot **164** and additional crawler robot **182** can be computer numerical control (CNC) machines which uses cartesian coordinates.

In one illustrative example, one or more technical solutions are present that overcome a technical problem with attaching flexible track system **115** that maintains a desired distance **118** from surface **120** of structure **102** on which manufacturing operations **108** are performed. As a result, one or more technical solutions may provide a technical effect of enabling automation of manufacturing operations **108** on structure **102.** For example, the illustrative example may provide one or more technical solutions in which at least one of desired distance **118** or angle **132** is maintained for flexible tracks **110.** In other words, desired distance **118,** angle **132,** or both is maintained for flexible tracks **110.** One or more technical solutions enable crawler robot **164** to perform manufacturing operations **108** with at least one of desired distance **118** or angle **132** with respect to surface **120** of structure **102.**

For example, one or more technical solutions enable positioning crawler robot **164** such that the tool for crawler robot **164** has an orientation that is substantially perpendicular to surface **120** of structure **102.** In this manner, crawler robot **164** can perform manufacturing operations such as machining, installing fasteners, and other types of manufacturing operations that require a particular angle or distance from surface **120** of the structure **102.** Desired distance **118** also allows for crawler robot **164** to perform operations. For example, tools for crawler robot **164** may have an operation range based on the distance of crawler robot **164** from surface **120** of structure **102.** Maintaining desired distance **118** allows for crawler robot **164** to perform manufacturing operations **108.**

The illustration of manufacturing environment **100** in **Figure 1** is not meant to imply physical or architectural limitations to the manner in which the present disclosure may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in the present disclosure.

For example, flexible track system **115** has been described as having first flexible track **156** and second flexible track **158** that are parallel to each other. In another illustrative example, flexible track system **115** may be comprised of a single track rather than parallel tracks. In yet another illustrative example, flexible track system **115** may include three tracks in parallel. Further, a track may be either a single track or comprised of sections.

Also, one or more crawler robots in addition to or in place of crawler robot **164** can be connected to flexible track system **115** to perform manufacturing operations **108** at substantially the same time. For example, a first crawler robot may machine holes in structure **102** and a second crawler robot may install the fasteners in structure **102.**

Further, flexible track system **115** and crawler robot **164** can be used on inner mold line side **171** to perform the inner portion of the fastener assembly for installing fastener systems **173** in lap splice **175.** As a result, flexible track system **115** allows bridging of structural frames **197** for fuselage sections (not shown) providing inner support of stringers (not shown) and skin panels (not shown). Further, flexible track system **115** and crawler robot **164** can also be used on outer mold line side **177** of structure **102.**

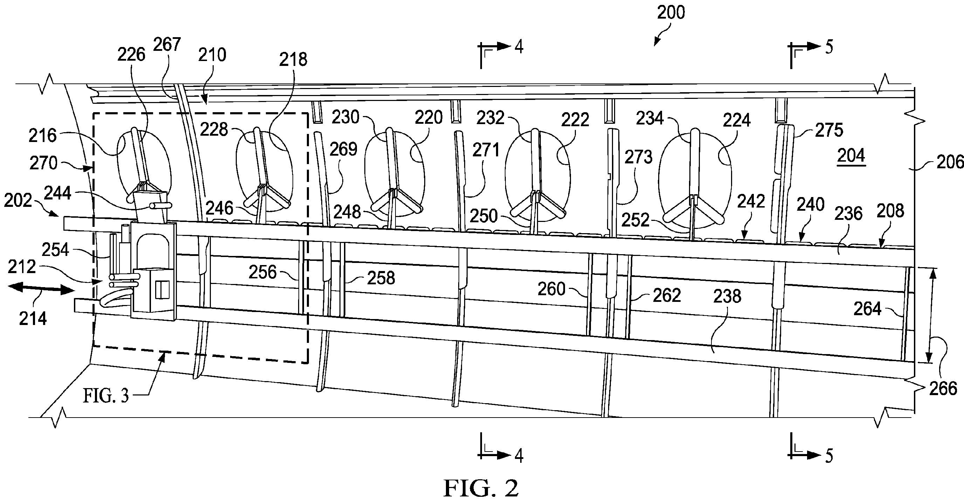

Turning now to **Figure 2****,** an illustration of a manufacturing environment is depicted in accordance with the present disclosure. In this illustrative example, manufacturing environment **200** is an example of one implementation for manufacturing environment **100** shown in block form in **Figure 1****.** As depicted, vacuum track manufacturing system **202** is attached to inner mold line side **204** for fuselage section **206.**

Vacuum track manufacturing system **202** comprises a number of different components. As depicted, vacuum track manufacturing system **202** comprises flexible track system **208,** positioning system **210,** and crawler robot **212.**

In the illustrative example, flexible track system **208** is attached to inner mold line side **204** for fuselage section **206.** Flexible track system **208** comprises first flexible track **236** and second flexible track **238.** Flexible track system **208** also comprises vacuum cup system **240** and variable height base system **242.**

Additionally, spreader bar **254,** spreader bar **256,** spreader bar **258,** spreader bar **260,** spreader bar **262,** and spreader bar **264** are connected to first flexible track **236** and second flexible track **238.** The spreader bars maintain desired span **266** between first flexible track **236** and second flexible track **238.** The spreader bars can be removed after vacuum cup system **240** has been activated to attach flexible track system **208** to inner mold line side **204** of fuselage section **206.**

As depicted in this illustrative example, first flexible track **236** and second flexible track **238** bridge structural frames on fuselage section **206,** such as structural frame **267,** structural frame **269,** structural frame **271,** structural frame **273,** and structural frame **275.**

Crawler robot **212** is attached to flexible track system **208** and can move in the direction of arrow **214** to perform manufacturing operations such as drilling holes, installing fasteners, performing inspections, or other suitable manufacturing operations for fuselage section **206.**

Positioning system **210** is connected to window opening **216,** window opening **218,** window opening **220,** window opening **222,** and window opening **224.** As depicted, window plug **226** is installed in window opening **216,** window plug **228** is installed in window opening **218,** window plug **230** is installed in window opening **220,** window plug **232** is installed in window opening **222,** and window plug **234** is installed in window opening **224.** In this example, pin **244** connects window plug **226** to variable height base system **242,** pin **246** connects window plug **228** to variable height base system **242,** pin **248** connects window plug **230** to variable height base system **242,** pin **250** connects window plug **232** to variable height base system **242,** and pin **252** connects window plug **234** to variable height base system **242.**

As depicted, positioning system **210** is also connected to flexible track system **208.** In this illustrative example, positioning system **210** provides at least one of positioning flexible track system **208** in a desired position on inner mold line side **204** of fuselage section **206** or supporting flexible track system **208.**

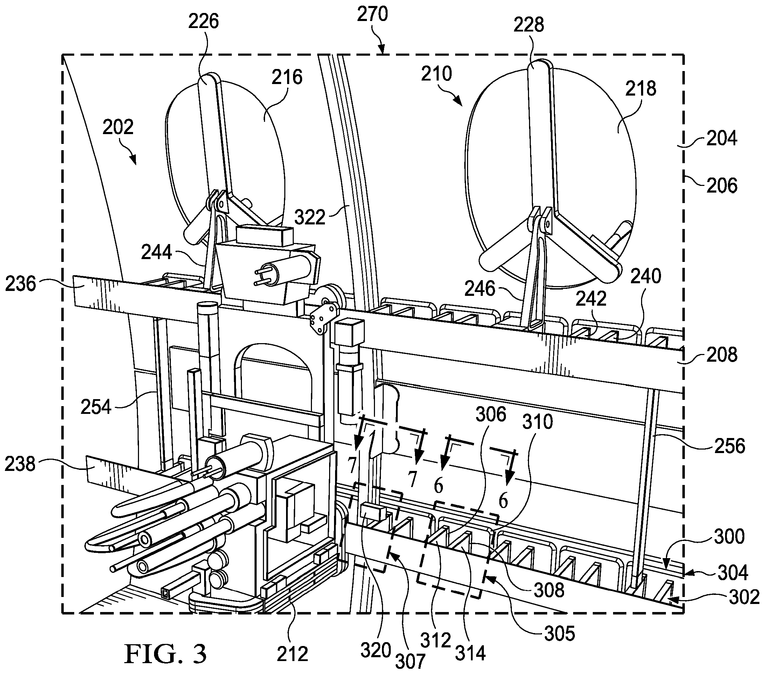

An enlarged view of vacuum track manufacturing system **202** in section **270** is depicted in **Figure 3****.** With reference now to **Figure 3****,** an illustration of an enlarged view of vacuum track manufacturing system **202** in **Figure 2** is depicted in accordance with the present disclosure. In the illustrative example, variable height base system **242** comprises bases **300** and frames **302.** Bases **300** are connected to vacuum cup units **304** in vacuum cup system **240.**

For example, in area **305,** base **312** is connected to frame **306** and vacuum cup unit **310.** Base **314** is connected to frame **308** and vacuum cup unit **310.** Frame **306** and frame **308** are connected to second flexible track **238.**

Also, in this enlarged view of section **270,** track clamp **320** can be attached to frame **322** of inner mold line side **204** of fuselage section **206.** Track clamp **320** is configured to secure second flexible track **238** to frame **322** on inner mold line side **204** of fuselage section **206.** Track clamp **320** can be utilized to increase rigidity after spreader bars, such as spreader bar **254** and spreader bar **256,** in this view are removed. Further, track clamp **320** in area **307** can reduce the possibility that second flexible track **238** and crawler robot **212** can swing or move in an undesired direction if vacuum is lost by vacuum cup system **240.**

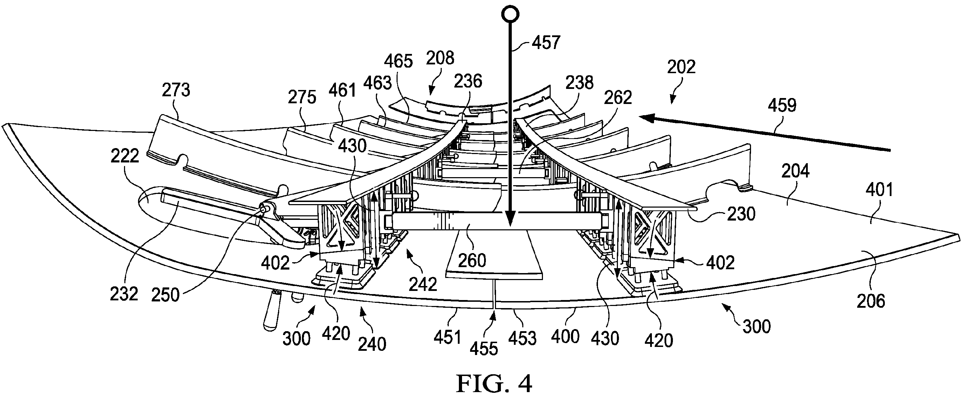

With reference next to **Figure 4****,** an illustration of a cross-sectional view of vacuum track manufacturing system **202** attached to fuselage section **206,** both shown in **Figure 2****,** is depicted in accordance with the present disclosure. As depicted, a cross-sectional view of vacuum track manufacturing system **202** attached to fuselage section **206** is shown taken along lines **4-4** in **Figure 2****.**

This cross-sectional view provides increased visualization of contour **400** for surface **401** of inner mold line side **204** of fuselage section **206.** As depicted in this example, angled ends **402** of bases **300** set number of angles **420** for first flexible track **236** and second flexible track **238.** Angles **420** may be selected such that first flexible track **236** and second flexible track **238** compensate for the fact that contour **400** of surface **401** may not locally extend in a plane parallel to that of the first flexible track **236** and second flexible track **238.**

Further, bases **300** have a height (not shown) that set desired distance **430** for first flexible track **236** and second flexible track **238** relative to surface **401** of inner mold line side **204** for fuselage section **206.** Desired distance 430 can change depending on at least one of the type of crawler robot, type of tool, surface features on surface **401,** or some combination thereof at different locations on surface **401** of inner mold line side **204.**

In this illustrative example, first flexible track **236** and second flexible track **238** bridge structural frames, such as structural frame **273,** structural frame **275,** structural frame **461,** structural frame **463,** structural frame **465.** The bridging of these structural frames is enabled through the configuration of variable height base system **242.** For example, the figuration of at least one of bases **300,** frames **302,** or vacuum cup units **304** enable the bridging of the structural frames by first flexible track **236** and second flexible track **238** in flexible track system **208.**

Also seen in this example, first flexible track **236** and second flexible track **238** in flexible track system **208** are parallel with each other and with splice **455.** In this view, first skin panel **451** and second skin panel **453** in fuselage section **206** are joined at splice **455.** As depicted, splice **455** runs longitudinally through fuselage section **206.** In this depicted example, splice **455** is a butt splice. As depicted, spreader bar **260** and spreader bar **262** bridge splice **455** when splice **455** is present.

Also shown in this example is a tapering of fuselage section **206.** In the illustrative example, radius **457** for fuselage section **206** tapers in the direction of arrow **459.** As depicted, radius **457** reduces in the direction of arrow **459.** With the reduction in radius **457** in the direction of arrow **459,** angled ends **402** of bases **300** have number of angles **420** that increase in the direction of arrow **449** in a manner to cause first flexible track **236** and second flexible track **238** to compensate for the fact that contour **400** of surface **401** may not locally extend in a plane parallel to that of the first flexible track **236** and second flexible track **238.**

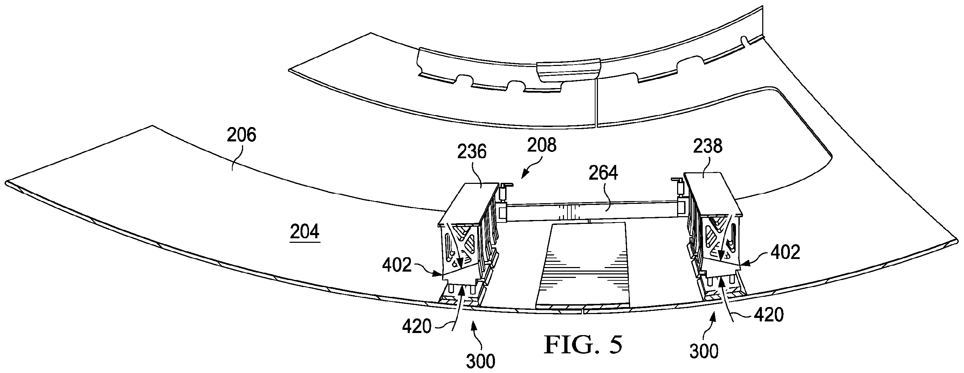

With reference next to **Figure 5****,** an illustration of a cross-sectional view of vacuum track manufacturing system **202** attached to fuselage section **206,** both shown in **Figure 2****,** is depicted in accordance with the present disclosure. As depicted, a cross-sectional view of vacuum track manufacturing system **202** attached to fuselage section **206** is shown taken along lines **5-5** in **Figure 2****.**

In this cross-sectional view, angled ends **402** for bases **300** have number of angles **420** that are greater than number of angles **420** for angled ends **402** in the cross-sectional view seen in **Figure 4****.**

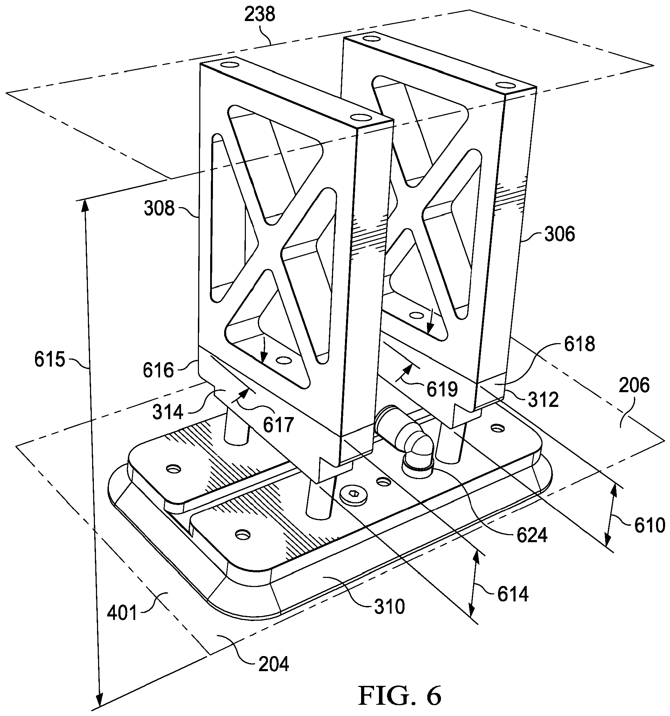

With reference next to **Figure 6****,** an illustration of components in flexible track system **208** in **Figure 2** is depicted in accordance with the present disclosure. In this illustrative example, an enlarged view of components in area **305** in flexible track system **208** taken in the direction of lines **6-6** is shown.

In this view, base **312** has height **610** and angled end **618.** Base **314** has height **614** and angled end **616.** Height **610** and height **614** are selected to maintain desired distance **615** between second flexible track **238** and surface **401** of inner mold line side **204** for fuselage section **206.**

Additionally, angled end **616** on base **314** can have angle **617** in number of angles **420** and angled end **618** on base **312** can have angle **619** in number of angles **420** that is selected to maintain a desired angle for second flexible track **238.** In this view, vacuum generator **624** is present. Each vacuum cup unit in vacuum cup system **240** in **Figure 2** has a vacuum generator for redundancy in the depicted examples.

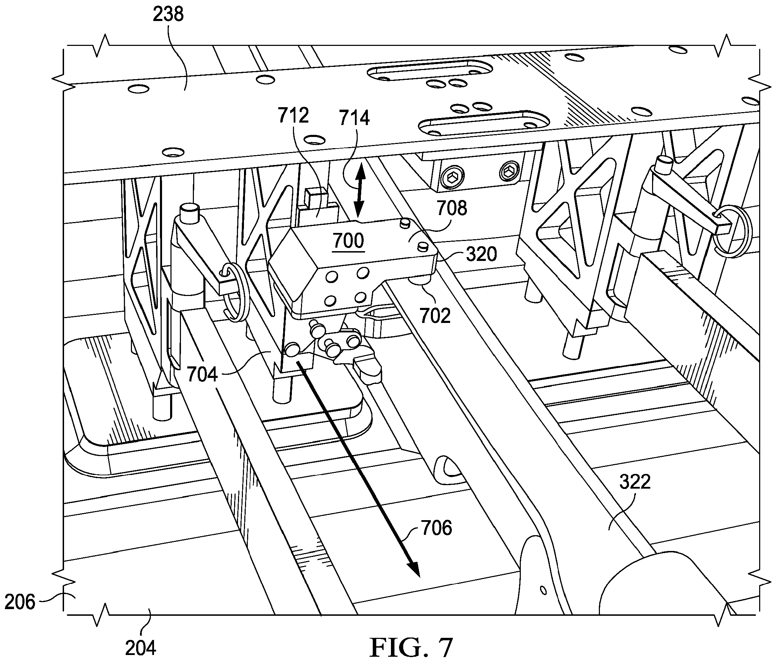

Turning next to **Figure 7****,** an illustration of an enlarged view of track clamp **320** in **Figure 3** is depicted in accordance with the present disclosure. In this figure, an enlarged view of track clamp in area **307** is seen in the direction of lines **7-7** in **Figure 3****.**

In this view, track clamp **320** has first clamping structure **700** that engages frame **322** with contact feet **702.** In this illustrative example, contact feet **702** can comprise urethane, rubber, or some other suitable type of material. The material can be selected as one that reduces the possibility of causing inconsistencies on frame **322.** In this illustrative example, second clamping structure **704** can rotate about axis **706** to engage frame **322.**

In this illustrative example, track clamp **320** is connected to frame **322** by linear rail **712.** As depicted, linear rail **712** is configured to reduce or prevent constraining second flexible track **238.** In this illustrative example, linear rail **712** allows for fine adjustments in the direction of arrow **714.**

The illustration of vacuum track manufacturing system **202** and the different components in **Figures 2-7** have been presented as an illustration for one manner in which vacuum track manufacturing system **106** shown in block form in **Figure 1** can be implemented. This illustration is not meant to limit the manner in which other illustrative examples can be implemented.

For example, the illustration of angled end **616** on base **314** shown in **Figure 6** and angled end **618** on base **312** shown in **Figure 6** is an example of one manner in which number of angles **420** can be set for a flexible track, such as second flexible track **238.** This angle can also be set using other mechanisms in other illustrative examples. As another example, flexible track system **208** can be used with splice **455** and can take other forms other than a butt splice. For example, splice **455** may be a lap splice, a bevel splice, a half lap splice, or some other suitable type of splice.

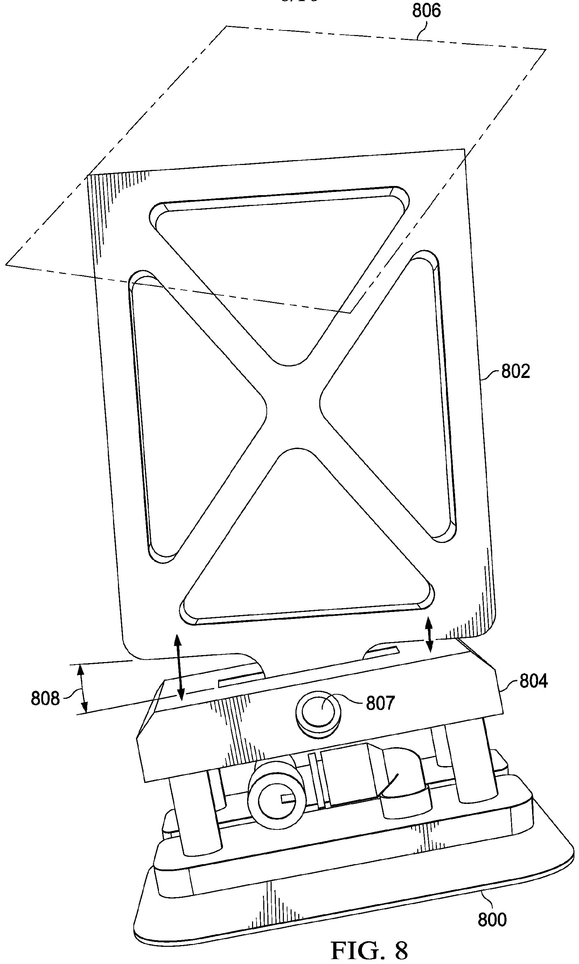

In **Figure 8****,** an illustration of another mechanism for setting an angle for a flexible track is depicted in accordance with the present disclosure. As depicted, vacuum cup unit **800,** frame **802,** base **804,** and flexible track **806** are examples are components in one physical implementation of flexible track system **115** shown in block form in **Figure 1****.** In this particular example, angle **808** is set for flexible track **806** by frame **802** which is rotatably connected to base **804,** which is connected to vacuum cup unit **800.** In other words, frame **802** can be rotated about axis **807** to set angle **808** for flexible track **806.**

As depicted, vacuum cup unit **800** is an example of an implementation for a vacuum cup unit in vacuum cup units **117** in **Figure 1****.** Frame **802** is an example of an implementation of a frame in frames **126** shown in block form in **Figure 1****.** Base **804** is an example of an implementation for a base in bases **124** shown in block form in **Figure 1****.**

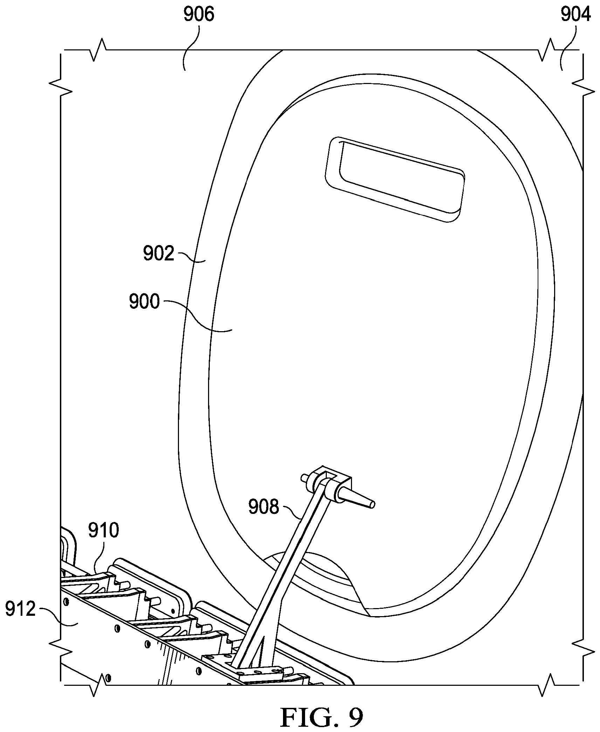

As another illustrative example, **Figure 9** is an illustration of an implementation for a positioning system in accordance with the present disclosure. In this illustrative example, window plug **900** is an example of another implementation of a window plug in window plugs **150** shown in block form in **Figure 1****.** Window plug **900** is an example of an additional implementation in addition to window plug **622** in **Figure 6****.**

In this example, window plug **900** is installed in window opening **902** of inner mold line **904** of fuselage section **906.** In this depicted example, link **908** connects window plug **900** to frame **910** for flexible track **912.**

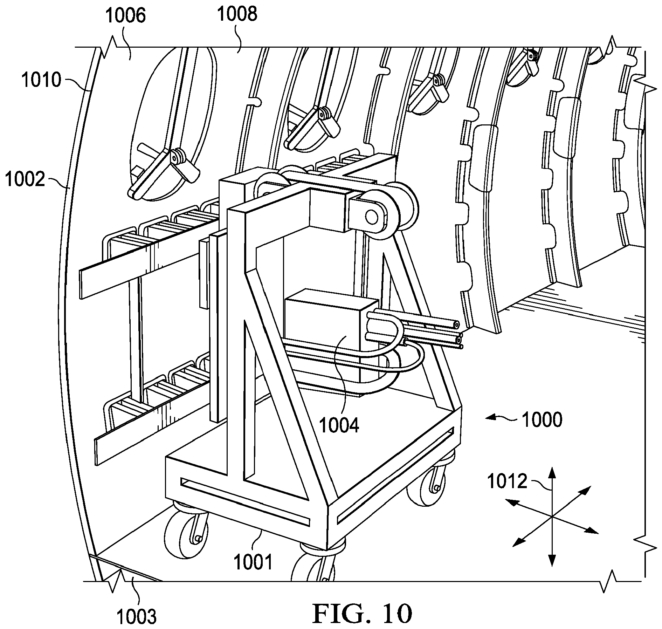

With reference now to **Figure 10****,** an illustration of a support system for positioning a portion of a flexible track system and a crawler robot is depicted in accordance with the present disclosure. In this illustrative example, support system **1000** comprises mobile cart **1001.** Mobile cart **1001** holds first section **1002** of flexible track system **1003** and crawler robot **1004.** Mobile cart **1001** can move these components about axes **1012.**

In this illustrative example, support system **1000** has placed first section **1002** and crawler robot **1004** onto surface **1006** on inner mold line side **1008** of fuselage section **1010.** After placement of first section **1002** of flexible track system **1003,** additional sections (not shown) of flexible track system **1003** can be positioned and connected to first section **1002** to assemble flexible track system **1003.**

The illustration of support system **1000** in **Figure 10** is provided as an example of one implementation for support system **166** shown in block form in **Figure 1****.** This illustration is not meant to limit the manner in which other illustrative examples can be implemented. For example, support system **166** can take the form of a mobile robotic arm (not shown), a crane (not shown) for outer mold line attachments, or other suitable platforms instead of mobile cart **1010.**

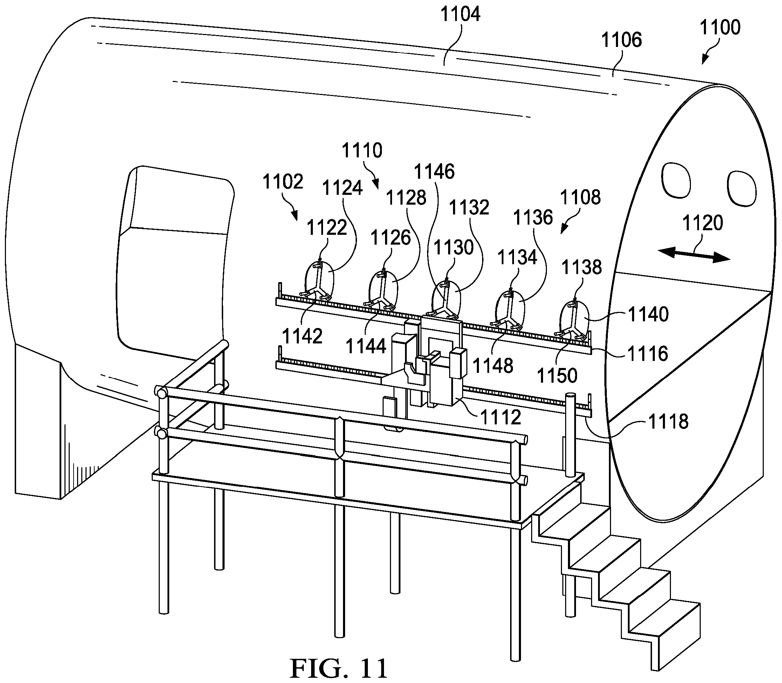

With Reference now to **Figure 11****,** an illustration of a manufacturing environment is depicted in accordance with the present disclosure. In this illustrative example, manufacturing environment **1100** is an example of another implementation for manufacturing environment **100** shown in block form in **Figure 1****.** As depicted, vacuum track manufacturing system **1102** is attached to outer mold line side **1104** for fuselage section **1106.**

Vacuum track manufacturing system **1102** comprises a number of different components. As depicted, vacuum track manufacturing system **1102** comprises flexible track system **1108,** positioning system **1110,** and crawler robot **1112.**

Flexible track system **1108** is attached to outer mold line side **1104** of fuselage section **1106.** Crawler robot **1112** is attached to first flexible track **1116** and second flexible track **1118** in flexible track system **1108.** Crawler robot **1112** can move in the direction of arrow **1120** along flexible track system **1108** and perform manufacturing operations on outer mold line side **1104** of fuselage section **1106.**

In this illustrative example, positioning system **1110** comprises window plug **1122** connected to window opening **1124,** window plug **1126** connected to window opening **1128,** window plug **1130** connected to window opening **1132,** window plug **1134** connected to window opening **1136,** window plug **1138** connected to window opening **1140.** Window plug **1122** is connected to flexible track system **1108** by cable **1142,** window plug **1126** is connected to flexible track system **1108** by cable **1144,** window plug **1130** is connected to flexible track system **1108** by cable **1146,** window plug **1134** is connected to flexible track system **1108** by cable **1148,** and window plug **1138** is connected to flexible track system **1108** by cable **1150.**

As depicted in this example, positioning system **1110** enables placing flexible track system **1108** in a desired position on outer mold line side **1104** of fuselage section **1106.** Further, positioning system **1110** also provides support in the event that flexible track system **1108** fails to maintain attachment to fuselage section **1106.**

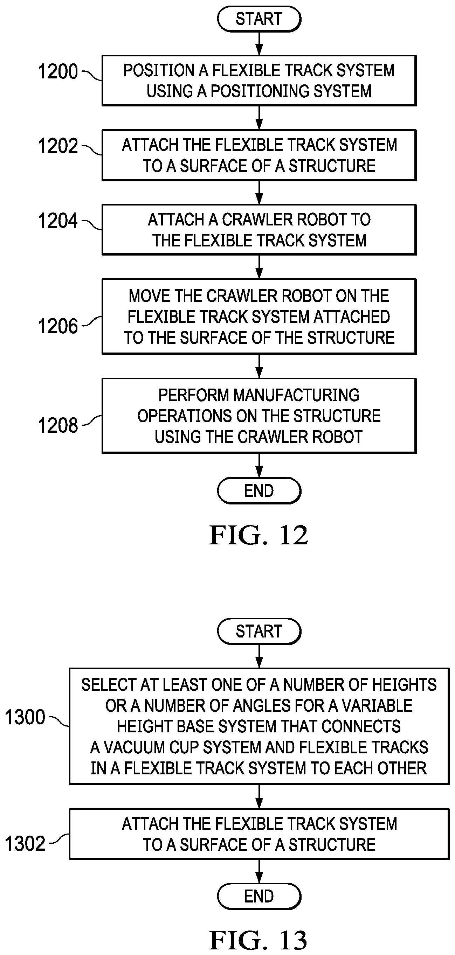

Turning next to **Figure 12****,** an illustration of a flowchart of a process for moving a crawler robot in a surface of a structure is depicted in accordance with the present disclosure. The process illustrated in **Figure 12** can be implemented in manufacturing environment **100** in **Figure 1****.** For example, the process can be implemented using flexible track system **115** in vacuum track manufacturing system **106** to enable crawler robot **164** to have at least one of desired distance **118** or angle **132** with respect to surface **120** of structure **102** to perform manufacturing operations **108.**

For example, the process can be used with an implementation of vacuum track manufacturing system **106,** shown in block form in **Figure 1****,** such as vacuum track manufacturing system **202** attached to inner mold line side **204** for fuselage section **206** in **Figure 2** or vacuum track manufacturing system **1102** attached to outer mold line side **1104** for fuselage section **1106** in **Figure 11****.** The process begins by positioning flexible track system **115** using positioning system **142** (operation **1200).** In operation **1200,** positioning system **142** extends from variable height base system **114** and is configured to connect to a group of features **144** for structure **102** to position flexible track system **115** in desired position **146** on structure **102** for crawler robot **164** to properly perform manufacturing operations **108.**

The process attaches flexible track system **115** to surface **120** of structure **102** (operation **1202).** Flexible track system **115** comprises flexible tracks **110,** vacuum cup system **112,** and variable height base system **114.** Variable height base system **114** connects vacuum cup system **112** and flexible tracks **110** to each other. In operation **1200,** variable height base system **114** has heights **116** selected to maintain desired distance **118** between flexible tracks **110** and surface **120** of structure **102** to which vacuum cup system **112** is attached.

For example, flexible tracks **110** can be connected to surface **120** of structure **102** in which surface **120** can be located on inner mold line side **204** for fuselage section **206.** In another example, flexible tracks **110** can be connected to surface **120** of structure **102** in which surface **120** can be located on outer mold line side **177** in fuselage section **1106** in **Figure 11****.**

The process attaches crawler robot **164** to flexible track system **115** (operation **1204).** The attachment of crawler robot **164** to flexible track system **115** can be performed by human operators. In another example, crawler robot **164** is positioned on flexible tracks **110** using a support system as an implementation of operation **1204.** Support system **166** can be used by the human operators or controlled by controller **190,** or a combination of both. In another illustrative example, support system **166** can be an automated system that is configured to move and attach crawler robot **164** to flexible tracks **110.**

Crawler robot **164** moves on flexible track system **115** attached to surface **120** of structure **102** (operation **1206).** The process performs manufacturing operations **108** on structure **102** using crawler robot **164** (operation **1208).** The process terminates thereafter. In the illustrative example, crawler robot **164** properly performs manufacturing operations **108** when crawler robot **164** has desired distance **118** from surface **120** of structure **102.** When desired distance **118** is not present, crawler robot **164** is unable to perform manufacturing operations **108.** For example, crawler robot **164** may utilize tools that require a specific distance for proper operation. When desired distance **118** is absent, the tools are unable to operate properly. For example, if crawler robot **164** is at a distance greater than desired distance **118,** crawler robot **164** may be unable to install a collar or a nut on a bolt. In this example, desired distance **118** translates to locating flexible tracks **110** at a location relative to surface **120** of structure **102,** splice **101,** or both in a manner that permits crawler robot **164** to operate properly. This feature aids in establishing the height of flexible tracks **110,** the width of flexible tracks **110,** and the distance of flexible tracks **110** from surface **120** of structure **102,** splice **101,** or both.

In operation **1206,** For example, angles **122** may be selected such that first flexible track **156** and second flexible track **158** match contour **128** of surface **120** such that first flexible track **156** and second flexible track **158** are substantially perpendicular to surface **120** on inner mold line side **171** of structure **102.** Crawler robot **164** may require being substantially perpendicular to surface **120** to properly perform manufacturing operations **108.** For example, crawler robot **164** may have a collar installation tool that requires the tool to be substantially perpendicular with surface **120** to properly install a collar on a bolt.

Turning to **Figure 13****,** an illustration of a flowchart of a process for installing a flexible track system is depicted in accordance with the present disclosure. The process illustrated in **Figure 13** can be implemented in manufacturing environment **100** to install flexible track system **115** to surface **120** of structure **102** to perform manufacturing operations **108** on structure **102** in **Figure 1****.**

The process begins by selecting at least one of a number of heights **116** or a number of angles **122** for variable height base system **114** that connects vacuum cup system **112** and flexible tracks **110** in flexible track system **115** to each other (operation **1300).** In operation **1300,** at least one of the number of heights **116** or the number of angles **122** for variable height base system **114** maintains at least one of desired distance **118** between flexible tracks **110** and surface **120** of structure **102** to which vacuum cup system **112** is attached or causes flexible tracks **110** in flexible track system **115** to match contour **128** of surface **120** of structure **102.** Further, a configuration of at least one of variable height base system **114** or vacuum cup system **112** enables flexible tracks **110** to bridge structural frames **197** on surface **120** of structure **102.**

The process attaches flexible track system **115** to surface **120** of structure **102** (operation **1302).** The process terminates thereafter.

In determining where to place flexible track system **115** relative to splice **101,** first flexible track **156** and second flexible track **158** in flexible tracks **110** are placed parallel to splice **101,** which can be defined by link pins **152** for window plugs **150.** The placement of first flexible track **156** and second flexible track **158** in flexible tracks **110** can be made such that a splice plate, butt splice, or other splicing feature in splice **101** are between flexible tracks **110.**

The thickness of splice **101** can be accommodated by Z-axis travel, stroke, or both, from a tool on crawler robot **164.** Heights **116** of variable height base system **114** affects the center of gravity of flexible track system **115** when used in inner mold line side **171.** Reducing heights **116** of variable height base system **114** is desirable to reduce the center of gravity of flexible track system **115** such that a moment acting on vacuum cup units **117** is reduced. As depicted, reducing heights **116** results in a reduction in system overhang and moments acting on vacuum cup units **117** in vacuum cup system **112.** As a result, the deflection of flexible track system **115** can be reduced resulting in increased accuracy in positioning tools use by crawler robot **164.**

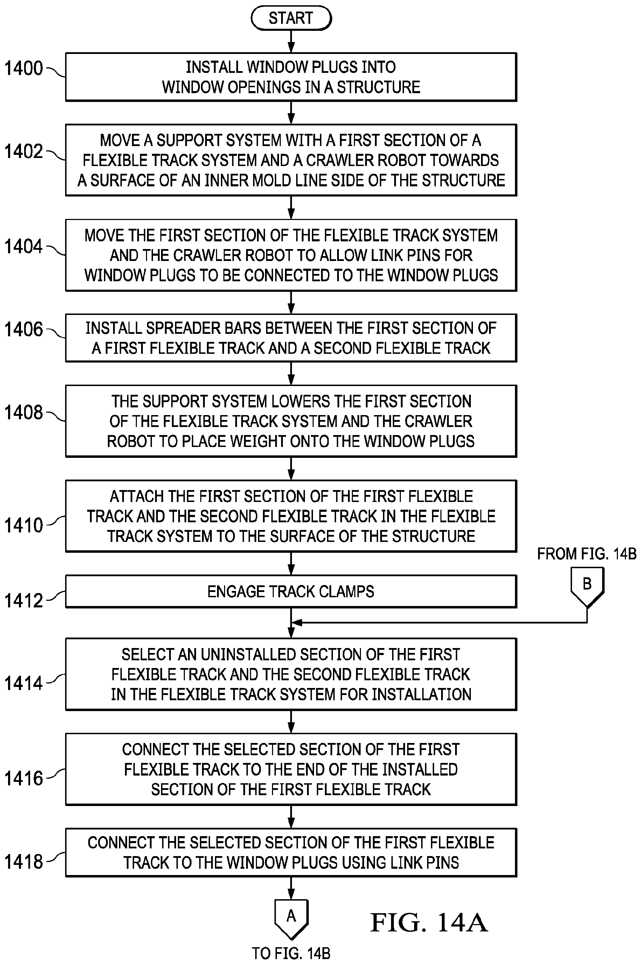

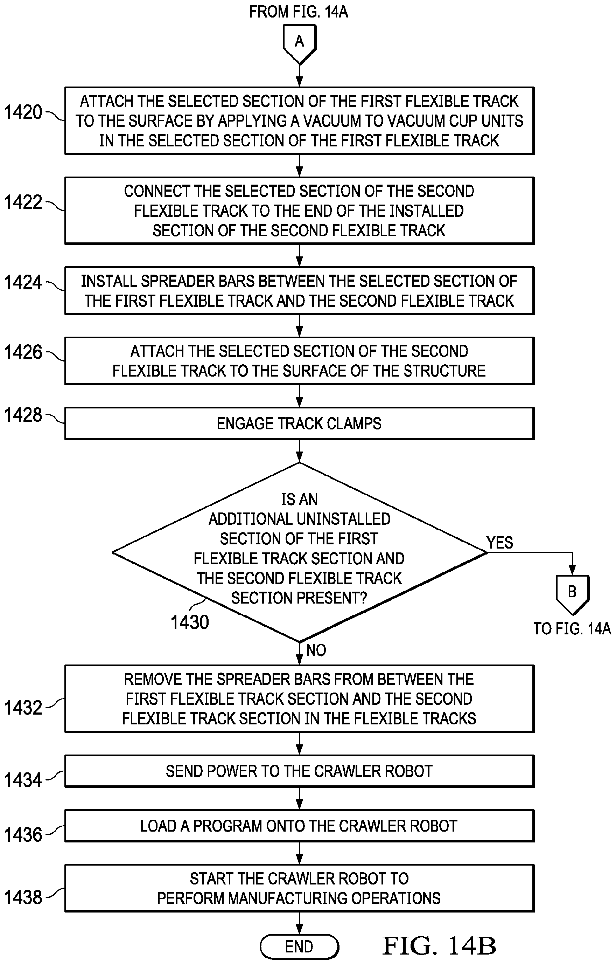

With reference next to **Figures 14A** and **14B****,** illustrations of a flowchart of a process for deploying a vacuum track manufacturing system are depicted in accordance with the present disclosure. The process illustrated in **Figures 14A** and **14B** can be implemented in manufacturing environment **100** to deploy vacuum track manufacturing system **106** onto structure **102** for object **104** in **Figure 1****.**

The process beings by installing window plugs **150** into window openings **148** in structure **102** (operation **1400).** In this example, structure **102** can be a fuselage section for object **104** such as an aircraft. Further other mechanism can be used in addition to or in place of window plugs **150** placed into window openings **148.** For example, fasteners can be placed into temporary holes formed specifically for positioning flexible track system **115,** open holes in structure **102,** and other structural features to which a fastening system can be used to attach flexible track system **115** in desired position **146** on structure **102.**

The process moves support system **166** with a first section of flexible track system **115** and crawler robot **164** towards surface **120** of inner mold line side of structure **102** (operation **1402).** In this example, support system **166** can be mobile cart **1001** in **Figure 10****.**

The process moves the first section of flexible track system **115** and crawler robot **164** to allow link pins **152** for window plugs **150** to be connected to window plugs **150** (operation **1404).** In operation **1404,** link pins **152** are connected to flexible track system **115** before connecting link pins **152** to window plugs **150.** In other examples, link pins **152** can be pre-connected to window plugs **150** and then connected to flexible track system **115.**

The process installs spreader bars **160** between the first section of first flexible track **156** and second flexible track **158** (operation **1406).** In one illustrative example, installing spreader bars **160** between first flexible track **156** and second flexible track **158** in flexible tracks **110** results in spreader bars **160** bridging splice **101** between first flexible track **156** and second flexible track **158.** The support system **166** lowers the first section of flexible track system **115** and crawler robot **164** to place weight onto window plugs **150** (operation **1408)**.

The process attaches first section of first flexible track **156** and second flexible track **158** in flexible track system **115** to surface **120** of structure **102** (operation **1410).** In operation **1410,** a vacuum is applied by vacuum cup units **117** to attach the first section of first flexible track **156** and second flexible track **158** to surface **120** of structure **102.** The process then engages track clamps (operation **1412).** In operation **1412,** track clamps can be implemented using track clamp **320.**

The process selects an uninstalled section of first flexible track **156** and second flexible track **158** in flexible track system **115** for installation (operation **1414).** The process connects the selected section of first flexible track **156** to the end of the installed section of first flexible track **156** (operation **1416).** The process connects the selected section of first flexible track **156** to window plugs **150** using link pins **152** (operation **1418).** The process attaches the selected section of first flexible track **156** to surface **120** by applying a vacuum to vacuum cup units **117** in selected section of first flexible track **156** (operation **1420).**

Next, the process connects the selected section of second flexible track **158** to the end of the installed section of second flexible track **158** (operation **1422).** The process installs spreader bars **160** between the selected section of first flexible track **156** and second flexible track **158** (operation **1424).** Spreader bars **160** may be removed from the installed section of the first section of first flexible track **156** and second flexible track **158** and used in operation **1420.** In other examples, spreader bars **160** may be left in place.

Thereafter, the process attaches the selected section of the second flexible track **158** to surface **120** of structure **102** (operation **1426).** The process then engages track clamps (operation **1428).**

A determination is made as to whether an additional uninstalled section of first flexible track **156** and section of second flexible track **158** is present (operation **1430).** If an additional uninstalled section of first flexible track **156** and section of second flexible track **158** is present, the process returns to operation **1414.**

Otherwise, the process removes spreader bars **160** from between section of first flexible track **156** and section of second flexible track **158** in flexible tracks **110** (operation **1432).** The process then sends power to crawler robot **164** (operation **1434).** Next, the process loads a program onto crawler robot **164** (operation **1436),** wherein crawler robot **164** begins to perform manufacturing operations **108** (operation **1438).** The process terminates thereafter.

In performing manufacturing operations **108** in operation **1438,** crawler robot **164** can perform at least one of inspection and installing nuts or collars on pins in fastener systems **173** inserted from outer mold line side **177** towards inner mold line side **171.**

In this illustrative example, crawler robot **164** on inner mold line side **171** of structure **102** follows additional crawler robot **182** operating on outer mold line side **177** of structure **102.** Crawler robot **164** can be a slave or may operate independently to additional crawler robot **182.**

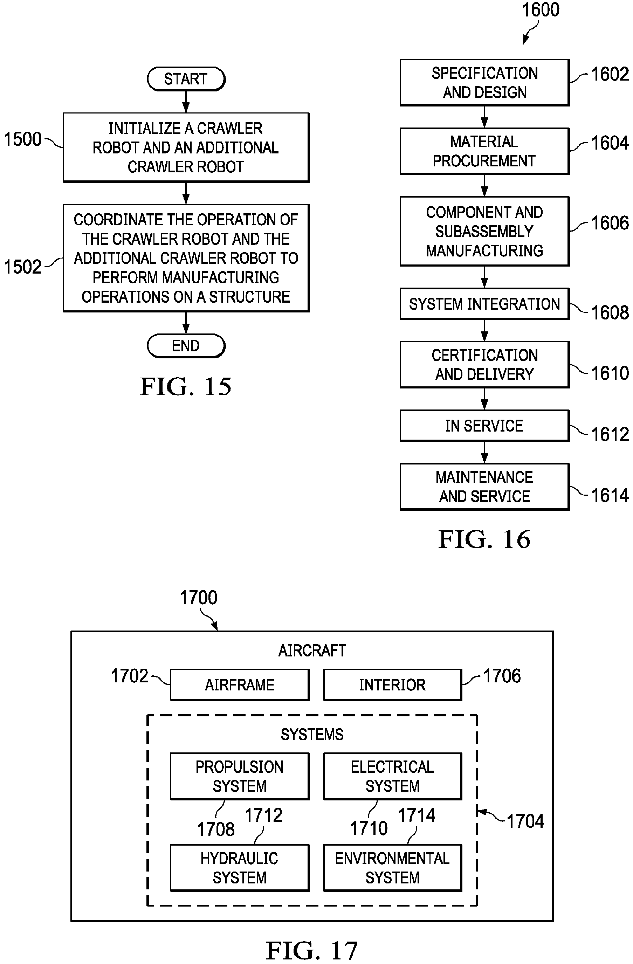

With reference now to **Figure 15****,** an illustration of a flowchart of a process for forming manufacturing operations is depicted in accordance with the present disclosure. The process illustrated in **Figure 15** can be implemented in manufacturing environment **100** in **Figure 1****.** The different operations can be implemented using controller **190** running on computer system **192.** The different operations can occur in response to controller **190** processing program **194** in **Figure 1****.**

The process begins by initializing crawler robot **164** additional crawler robot **182** (operation **1500).** In operation **1500,** the crawler robots are turned on to perform manufacturing operations **108.** The process coordinates the operation of crawler robot **164** and additional crawler robot **182** to perform manufacturing operations **108** on structure **102** (operation **1502).** The process terminates thereafter.

For example, the coordination of crawler robot **164** and additional crawler robot **182** can occur to install fastener systems **173.** For example, additional crawler robot **182** on outer mold line side **177** of structure **102** inserts pins for fastener systems **173** while crawler robot **164** on inner mold line side **171** of structure **102** installs collars on the pins inserted by additional crawler robot **182.**

The flowcharts and block diagrams in the different depicted embodiments illustrate the architecture, functionality, and operation of some possible implementations of apparatuses and methods in the present disclosure. In this regard, each block in the flowcharts or block diagrams can represent at least one of a module, a segment, a function, or a portion of an operation or step. For example, one or more of the blocks can be implemented as program code, hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams may be implemented using special purpose hardware systems that perform the different operations or combinations of special purpose hardware and program code run by the special purpose hardware.

In some alternative implementations of the present disclosure, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

Illustrative embodiments of the disclosure may be described in the context of aircraft manufacturing and service method **1600** as shown in **Figure 16** and aircraft **1700** as shown in **Figure 17****.** Turning first to **Figure 16****,** an illustration of a block diagram of an aircraft manufacturing and service method is depicted in accordance with the present disclosure. During pre-production, aircraft manufacturing and service method **1600** may include specification and design **1602** of aircraft **1700** in **Figure 17** and material procurement **1604.**

During production, component and subassembly manufacturing **1606** and system integration **1608** of aircraft **1700** in **Figure 17** takes place. Thereafter, aircraft **1700** in **Figure 17** may go through certification and delivery **1610** in order to be placed in service **1612.** While in service **1612** by a customer, aircraft **1700** in **Figure 17** is scheduled for routine maintenance and service **1614,** which may include modification, reconfiguration, refurbishment, and other maintenance or service.

Each of the processes of aircraft manufacturing and service method **1600** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 17****,** an illustration of a block diagram of an aircraft is depicted in which the present disclosure may be implemented. In this example, aircraft **1700** is produced by aircraft manufacturing and service method **1600** in **Figure 16** and may include airframe **1702** with plurality of systems **1704** and interior **1706.** Examples of systems **1704** include one or more of propulsion system **1708,** electrical system **1710,** hydraulic system **1712,** and environmental system **1714.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1600** in **Figure 16****.** In the illustrative example, vacuum track manufacturing system **106** in the different processes described using this system can be used to perform manufacturing operations on aircraft **1700.** For example, flexible track system **115** in vacuum track manufacturing system **106** can be attached to the surface of a structure for aircraft **1700** for use by crawler robot **164** to perform manufacturing operations **108.**

For example, flexible track system **115** can provide at least one of the desired distance **118** or angle **132** with respect to surface **120** of structure **102** such as a fuselage section of airframe **1702** of aircraft **1700.** For example, flexible track system **115** with crawler robot **164** in vacuum track manufacturing system **106** can be employed to perform manufacturing operations **108** such as drilling holes or installing fasteners in the fuselage section for airframe **1702.**

In one illustrative example, components or subassemblies produced in component and subassembly manufacturing **1606** in **Figure 16** may be fabricated or manufactured in a manner similar to components or subassemblies produced while aircraft **1700** is in service **1612** in **Figure 16****.** As yet another example, one or more apparatus embodiments, method embodiments, or a combination thereof may be utilized during production stages, such as component and subassembly manufacturing **1606** and system integration **1608** in **Figure 16****.** One or more apparatus embodiments, method embodiments, or a combination thereof may be utilized while aircraft **1700** is in service **1612,** during maintenance and service **1614** in **Figure 16****,** or both.

For example, vacuum track manufacturing system **106** can be used to manufacture components or subassemblies produced in component and subassembly manufacturing **1606,** such as assembling fuselage sections for airframe **1702.** Additionally, vacuum track manufacturing system **106** can also be used during system integration **1608.** For example, inspection, drilling, fastener installation, or other operations may be performed during system integration **1608** using vacuum track manufacturing system **106.**

The use of a number of the different illustrative embodiments may substantially expedite the assembly of aircraft **1700,** reduce the cost of aircraft **1700,** or both expedite the assembly of aircraft **1700** and reduce the cost of aircraft **1700.**

For example, vacuum track manufacturing system **106** for flexible track system **208** can operate during component and subassembly manufacturing **1606** to perform manufacturing operations such as, without limitation fastened components each other to form structures or fasten components to structures. Vacuum track manufacturing system **106** also may operate during maintenance and service **1614** to perform manufacturing operations such as inspection operations, drilling operations, faster installation operations, or other manufacturing operations to form structures or fasten components to structures when performing at least one of routine maintenance and service **1614,** which may include modification, reconfiguration, refurbishment, and other maintenance or service.

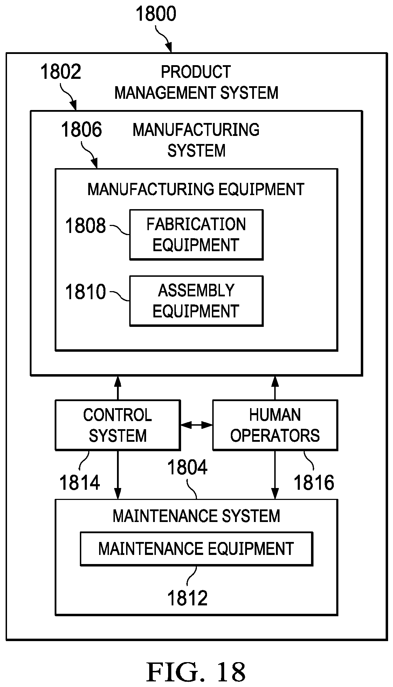

Turning now to **Figure 18****,** an illustration of a block diagram of a product management system is depicted in accordance with the present disclosure. Product management system **1800** is a physical hardware system. In this illustrative example, product management system **1800** may include at least one of manufacturing system **1802** or maintenance system **1804.**

Manufacturing system **1802** is configured to manufacture products, such as aircraft **1700** in **Figure 17****.** As depicted, manufacturing system **1802** includes manufacturing equipment **1806.** Manufacturing equipment **1806** includes at least one of fabrication equipment **1808** or assembly equipment **1810.**

Fabrication equipment **1808** is equipment that may be used to fabricate components for parts used to form aircraft **1700** in **Figure 17****.** For example, fabrication equipment **1808** may include machines and tools. These machines and tools may be at least one of a drill, a hydraulic press, a furnace, a mold, a composite tape laying machine, a vacuum system, a lathe, or other suitable types of equipment. Fabrication equipment **1808** may be used to fabricate at least one of metal parts, composite parts, semiconductors, circuits, fasteners, ribs, skin panels, spars, antennas, or other suitable types of parts.

Assembly equipment **1810** is equipment used to assemble parts to form aircraft **1700** in **Figure 17****.** In particular, assembly equipment **1810** may be used to assemble components and parts to form aircraft **1700** in **Figure 17****.** Assembly equipment **1810** also may include machines and tools. These machines and tools may be at least one of a robotic arm, a crawler, a faster installation system, a rail-based drilling system, or a robot. Assembly equipment **1810** may be used to assemble parts such as seats, horizontal stabilizers, wings, engines, engine housings, landing gear systems, and other parts for aircraft **1700** in **Figure 17****.** For example, assembly equipment **1810** may include flexible track system **115** and crawler robot **164** in vacuum track manufacturing system **106** in **Figure 1****.**

In this illustrative example, maintenance system **1804** includes maintenance equipment **1812.** Maintenance equipment **1812** may include any equipment needed to perform maintenance on aircraft **1700** in **Figure 17****.** Maintenance equipment **1812** may include tools for performing different operations on parts on aircraft **1700** in **Figure 17****.** These operations may include at least one of disassembling parts, refurbishing parts, inspecting parts, reworking parts, manufacturing replacement parts, or other operations for performing maintenance on aircraft **1700** in **Figure 17****.** These operations may be for routine maintenance, inspections, upgrades, refurbishment, or other types of maintenance operations.

In the illustrative example, maintenance equipment **1812** may include ultrasonic inspection devices, x-ray imaging systems, vision systems, drills, crawlers, and other suitable types of equipment. In some cases, maintenance equipment **1812** may include fabrication equipment **1808,** assembly equipment **1810,** or both to produce and assemble parts that may be needed for maintenance.

Product management system **1800** also includes control system **1814.** Control system **1814** is a hardware system and may also include software or other types of components. Control system **1814** is configured to control the operation of at least one of manufacturing system **1802** or maintenance system **1804.** In particular, control system **1814** may control the operation of at least one of fabrication equipment **1808,** assembly equipment **1810,** or maintenance equipment **1812.**

The hardware in control system **1814** may be using hardware that may include computers, circuits, networks, and other types of equipment. The control may take the form of direct control of manufacturing equipment **1806.** For example, robots, computer-controlled machines, and other equipment may be controlled by control system **1814.** In other illustrative examples, control system **1814** may manage operations performed by human operators **1816** in manufacturing or performing maintenance on aircraft **1700.** For example, control system **1814** may assign tasks, provide instructions, display models, or perform other operations to manage operations performed by human operators **1816.** In these illustrative examples, vacuum track manufacturing system **106** can be controlled by control system **1814** to manage at least one of the manufacturing or maintenance of aircraft **1700** in **Figure 17****.** As another example, control system **1814** may include controller **190,** which operates to control the operation of vacuum track manufacturing system **106** in **Figure 1****.** For example, controller **190** can coordinate the operation of crawler robot **164** and additional crawler robot **182** to perform manufacturing operations **108** on structure **102.**

In the different illustrative examples, human operators **1816** may operate or interact with at least one of manufacturing equipment **1806,** maintenance equipment **1812,** or control system **1814.** This interaction may be performed to manufacture aircraft **1700** in **Figure 17****.**

Of course, product management system **1800** may be configured to manage other products other than aircraft **1700** in **Figure 17****.** Although product management system **1800** has been described with respect to manufacturing in the aerospace industry, product management system **1800** may be configured to manage products for other industries. For example, product management system **1800** can be configured to manufacture products for the automotive industry as well as any other suitable industries.

The illustrative examples provide a method, an apparatus, and a system for flexible track system **115.** Flexible track system **115** can be attached to surface **120** of structure **102** using vacuum cup system **112.** Flexible tracks **110** in flexible track system **115** have at least one of desired distance **118** from surface **120** of structure **102** or angle **132** with respect to surface **120** of structure **102.**

In the illustrative examples describe above, one or more technical solutions are present that overcome a technical problem with attaching a flexible track system that maintains a desired distance from surface **120** of structure **102** on which manufacturing operations **108** are performed. As a result, one or more technical solutions may provide a technical effect of enabling automation of manufacturing operations on a structure. For example, the illustrative example may provide one or more technical solutions in which at least one of desired distance **118** from surface **120** or angle is maintained for flexible tracks **110** in flexible track system **115.** One or more technical solutions enable crawler robot **164** to perform manufacturing operations **108** with at least one of desired distance **118** from surface **120** of structure **102** or angle **132** with respect to surface **120** of structure **102.** In other words, desired distance **118** from surface **120** results in a desired height for flexible tracks **110.**

For example, one or more technical solutions enable positioning crawler robot **164** such that the tool for crawler robot **164** has an orientation that is substantially perpendicular to surface **120** of structure **102.** In this manner, crawler robot **164** can perform manufacturing operations **108** such as machining, installing fasteners, and other types of manufacturing operations that require a particular angle for distance from the surface of the structure. With the ability to maintain at least one of desired distance **118** or angle **132** of flexible tracks **110** with respect to surface **120** of structure **102,** crawler robots can perform manufacturing operations in an automated manner without using human operators.

Thus, one or more illustrative examples can be employed to perform manufacturing operations **108** on structure **102.** In one illustrative example, vacuum track manufacturing system **106** can be placed along splice **101** in a fuselage section to perform manufacturing operations **108** that join parts of the fuselage section to form splice **101.** For example, first flexible track **156** and second flexible track **158** can be placed in parallel to splice **101** running longitudinally along the fuselage section to perform manufacturing operations **108** to form splice **101.**

The description of the different illustrative embodiments has been presented for purposes of illustration and description and is not intended to be exhaustive or limited to the embodiments in the form disclosed. The different illustrative examples describe components that perform actions or operations. In the present disclosure, a component may be configured to perform the action or operation described. For example, the component may have a configuration or design for a structure that provides the component an ability to perform the action or operation that is described in the illustrative examples as being performed by the component.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A track manufacturing system (105, 106, 202,1102) comprising:
flexible tracks (110);
a base attaching system (107);
a structure (102), which structure can be selected from a group comprising an assembly, a sub-assembly, a fuselage section, a wing, a wing box, a horizontal stabilizer, a landing gear system, a hydraulic system, a skin panel, a stringer, a fuselage section, a composite fuselage section, and other suitable structures, and
a base system (121) connecting the base attaching system (107) and the flexible tracks (110) to each other in which the base system (121) maintains a desired distance (118) between the flexible tracks (110) and a surface (120) of the structure (102) to which the base attaching system (107) is attached in which the base system (121) enables flexible tracks (110) to bridge structural frames (197, 273) on the surface (120) of the structure (102),
wherein the base system (121) comprises:
a variable height base system (114, 242) connecting the base attaching system (107) and the flexible tracks (110) to each other, wherein the variable height base system (114, 242) has heights (116, ) selected to maintain the desired distance (118) between the flexible tracks (110) and the surface (120) of the structure (102) to which the base attaching system (107) is attached.

2. The track manufacturing system (105, 106, 202,1102) of claim 1, wherein the flexible tracks (110) comprise:
a first flexible track (156, 236); and
a second flexible track (158, 238), wherein the second flexible track (158, 238) is parallel to the first flexible track (156, 236) and wherein the first flexible track (156, 236) and the second flexible track (158, 238) are positioned in parallel with a splice (101, 455) in the structure (102).

3. The track manufacturing system (105, 106, 202,1102) of claim 1 or 2, wherein the variable height base system (114, 242) comprises:
a plurality of bases (124) having the heights (111) selected to maintain the flexible tracks (110) at the desired distance (118) from the surface (120) of the structure (102) such that the flexible tracks (110) match a contour (128) of the structure (102).

4. The track manufacturing system (105, 106, 202,1102) of claim 3, wherein each base (13), in the plurality of bases (124), is configured to set an angle (132) for each flexible track (134), in the plurality of flexible tracks (110), connected to each base (13) such that each flexible track (110, 134) compensates for the fact that the contour (128) may not locally extend in a plane parallel to that of each flexible track (134)preferably wherein the structure (102) is a fuselage section having a radius (457) that decreases and wherein angles (122) for the bases (124) for the flexible tracks (110) increase as the radius (457) decreases.

5. The track manufacturing system (105, 106, 202,1102) of claim 4, wherein the variable height base system (114, 242) further comprises:
frames (126) connected to the plurality of bases (124) and the plurality of flexible tracks (110, 134), wherein the plurality of bases (124) are connected to the base attaching system (107), preferably
wherein a frame (140) in the frames (126) is rotatably connected to the base (13) to set the angle (132) for each flexible track (134) connected to the frame (140) in a manner that causes eachflexible track (134) to compensate for the fact that the contour (128) may not locally extend in a plane parallel to that of each flexible track (134).

6. The track manufacturing system (105, 106, 202,1102) of claim 5, wherein each base (13) has an angled end (138) connected to the frame (140), wherein the angled end (138) has the angle (132) that causes each flexible track (134) to compensate for the fact that the contour (128) may not locally extend in a plane parallel to that of each flexible track (134).

7. The track manufacturing system (105, 106, 202,1102) of any of the preceding claims, wherein the flexible tracks (110), the base attaching system (107), and the variable height base system (114, 242) form a flexible track system (115, 208 ) and further comprising:
a positioning system (142, 210, 1110), wherein the positioning system (142, 210,1110) extends from the variable height base system (114, 242) and is configured to connect to a group of features (144) for the structure (102) to position the flexible track system (115, 208) in a desired position (146) on the structure (102) for properly performing manufacturing operations (108), preferably
wherein the group of features (144) comprises a group of window openings (148) in the structure (102), wherein the positioning system (142, 210, 1110) comprises a group of window plugs (150) and link pins (152) that connect the group of window plugs (150) to the variable height base system (114, 242), and wherein the flexible track (110, 134) has a desired position (146) on the surface (120) of the structure (102) when the group of window plugs (150) is connected to the group of window openings (148),
and/or
wherein the base attaching system (107) is a vacuum cup system (112) and wherein the positioning system (142) provides support for the flexible tracks (110) in case a vacuum loss occurs in the vacuum cup system (112) while the vacuum cup system (112) is attached to the surface (120) of the structure (102).

8. The track manufacturing system (105, 106, 202,1102) of any of the preceding claims, wherein the flexible tracks (110), the base attaching system (107), and the variable height base system (114, 242) form a flexible track system (115, 208), preferably further comprising:
a number of track clamps (168) connected to the frames (126) connected to the bases (124) and the flexible tracks (110, 134), wherein the number of track clamps (168) is configured to clamp a structural frame (170) on the structure (102).

9. A method for installing a flexible track system (115), as referred to in any of the preceding claims, the method comprising:
selecting at least one of a number of heights (111) or a number of angles (122) for a variable height base system (121) that connects a base attaching system (107) and flexible tracks (110) in the flexible track system (115) to each other, wherein at least one of the number of heights (111) or the number of angles (122) for the variable height base system (121) maintains at least one of a desired distance (118) between the flexible tracks (110) and a surface (120) of a structure (102) to which the base attaching system (107) is attached to the flexible tracks (110), such that each flexible track (134) in the plurality of flexible tracks (110) compensates for the fact that the contour (128) may not locally extend in a plane parallel to that of each flexible track (134)
which structure (102)can be selected from a group comprising an assembly, a sub-assembly, a fuselage section, a wing, a wing box, a horizontal stabilizer, a landing gear system, a hydraulic system, a skin panel, a stringer, a fuselage section, a composite fuselage section, and other suitable structures,
and
attaching the flexible track system (115) to the surface (120) of the structure (102) in which in a configuration of at least one of the variable height base system (121) or the base attaching system (107) enables the flexible tracks (110) to bridge structural frames (197) on the surface (120) of the structure (102).

10. The method of claim 9, wherein attaching the flexible track system (115) to the surface (120) of the structure (102) comprises:
installing spreader bars (160) between a first flexible track (156) in the flexible tracks (110) and a second flexible track (158) in the flexible tracks (110), wherein the spreader bars (160) bridge a splice (101, 455) between the first flexible track (156) and the second flexible track (158).

11. The method of claim 9 or 10, wherein attaching the flexible track system (115) to the surface (120) of the structure (102) comprises:
attaching the flexible track system (115) to the surface (120) of the structure (102) on an inner mold line side (171) of the structure (102) or an outer mold line side (177) of the structure (102).

12. The method of any of the claims 9-11, wherein the base attaching system (107) is a vacuum cup system (112) and wherein attaching the flexible track system (115) to the structure (102) comprises:
applying a vacuum (113) to the vacuum cup system (112) such that the vacuum cup system (112) is attached to the surface (120) of the structure (102).

13. The method of claim 12, wherein attaching the flexible track system (115) to the structure (102) further comprises:
attaching the flexible track system (115) to a group of features (144) on the structure (102) to attach the flexible track system (115) to a desired position (146) on the structure (102).

14. The method of claim 13, wherein the group of features (144) is a group of window openings (148) in the structure (102), and wherein the attaching step comprises:
installing a group of window plugs (150) into the group of window openings (148) in the structure (102);
positioning the flexible track system (115) relative to the group of window plugs (150); and
connecting the flexible track system (115) to the group of window plugs (150).

15. The method of claim 14, wherein connecting the flexible track system (115) to the group of window plugs (150) comprises:
connecting link pins (152) to frames (126) in the variable height base system (121) in first tracks in the flexible track system (115) and the group of window plugs (150).

## Patentansprüche

1. Herstellungssystem (105, 106, 202, 1102) unter Verwendung von flexiblen Führungen, das Folgendes umfasst:
flexible Führungen (110);
ein Basisbefestigungssystem (107);
eine Struktur (102), wobei die Struktur aus einer Gruppe ausgewählt werden kann, die eine Baugruppe, eine Unterbaugruppe, einen Rumpfabschnitt, einen Flügel, einen Flügelkasten, einen horizontalen Stabilisator, ein Fahrwerkssystem, ein Hydrauliksystem, eine Hautplatte, einen Stringer, einen Rumpfabschnitt, einen Verbund-Rumpfabschnitt und andere geeignete Strukturen umfasst, und
ein Basissystem (121), das das Basisbefestigungssystem (107) und die flexiblen Führungen (110) miteinander verbindet, wobei das Basissystem (121) einen gewünschten Abstand (118) zwischen den flexiblen Führungen (110) und einer Oberfläche (120) der Struktur (102) aufrechterhält, an der das Basisbefestigungssystem (107) befestigt ist, wobei das Basissystem (121) es den flexiblen Führungen (110) ermöglicht, strukturelle Gerüstelemente (197, 273) auf der Oberfläche (120) der Struktur (102) zu überbrücken,
wobei das Basissystem (121) Folgendes umfasst:
ein höhenvariables Basissystem (114, 242), das das Basisbefestigungssystem (107) und die flexiblen Führungen (110) miteinander verbindet, wobei das höhenvariable Basissystem (114, 242) Höhen (116) aufweist, die so gewählt sind, dass der gewünschte Abstand (118) zwischen den flexiblen Führungen (110) und der Oberfläche (120) der Struktur (102), an der das Basisbefestigungssystem (107) befestigt ist, aufrechterhalten wird.

2. Herstellungssystem (105, 106, 202, 1102) unter Verwendung von flexiblen Führungen nach Anspruch 1, wobei die flexiblen Führungen (110) Folgendes umfassen:
eine erste flexible Führung (156, 236); und
eine zweite flexible Führung (158, 238), wobei die zweite flexible Führung (158, 238) parallel zu der ersten flexiblen Führung (156, 236) verläuft und wobei die erste flexible Führung (156, 236) und die zweite flexible Führung (158, 238) parallel zu einer Verbindungsstelle (101, 455) in der Struktur (102) angeordnet sind.

3. Herstellungssystem (105, 106, 202, 1102) unter Verwendung von flexiblen Führungen nach Anspruch 1 oder 2, wobei das höhenvariable Basissystem (114, 242) Folgendes umfasst:
eine Vielzahl von Basen (124), die Höhen (111) aufweisen, die ausgewählt sind, um die flexiblen Führungen (110) in dem gewünschten Abstand (118) von der Oberfläche (120) der Struktur (102) zu halten, so dass die flexiblen Führungen (10) einer Kontur (128) der Struktur (102) entsprechen.

4. Herstellungssystem (105, 106, 202, 1102) unter Verwendung von flexiblen Führungen nach Anspruch 3, wobei jede Basis (13) aus der Vielzahl von Basen (124) ausgelegt ist, um einen Winkel (132) für jede flexible Führung (134) aus der Vielzahl von flexiblen Führungen (110) einzustellen, die mit jeder Basis (13) verbunden ist, so dass jede flexible Führung (110, 134) die Tatsache kompensiert, dass sich die Kontur (128) lokal nicht in einer Ebene parallel zu der jeder flexiblen Führung (134) erstrecken kann, wobei es sich bei der Struktur (102) vorzugsweise um einen Rumpfabschnitt handelt, der einen abnehmenden Radius (457) aufweist und wobei die Winkel (122) der Basen (124) zu den flexiblen Führungen (110) mit abnehmendem Radius (457) zunehmen.

5. Herstellungssystem (105, 106, 202, 1102) unter Verwendung von flexiblen Führungen nach Anspruch 4, wobei das höhenvariable Basissystem (114, 242) ferner Folgendes umfasst:
Gerüstelemente (126), die mit der Vielzahl von Basen (124) und der Vielzahl von flexiblen Führungen (110, 134) verbunden sind, wobei die Vielzahl von Basen (124) mit dem Basisbefestigungssystem (107) verbunden sind, vorzugsweise
wobei ein Gerüstelement (140) unter den Gerüstelementen (126) drehbar mit der Basis (13) verbunden ist, um den Winkel (132) zu jeder flexiblen Führung (134), die mit dem Gerüstelement (140) verbunden ist, in einer Weise einzustellen, die bewirkt, dass jede flexible Führung (134) die Tatsache kompensiert, dass sich die Kontur (128) lokal nicht in einer Ebene parallel zu der jeder flexiblen Führung (134) erstrecken kann.

6. Herstellungssystem (105, 106, 202, 1102) unter Verwendung von flexiblen Führungen nach Anspruch 5, wobei jede Basis (13) ein abgewinkeltes Ende (138) aufweist, das mit dem Gerüstelement (140) verbunden ist, wobei das abgewinkelte Ende (138) den Winkel (132) aufweist, der bewirkt, dass jede flexible Führung (134) die Tatsache kompensiert, dass sich die Kontur (128) lokal nicht in einer Ebene parallel zu der jeder flexiblen Führung (134) erstrecken kann.

7. Herstellungssystem (105, 106, 202, 1102) unter Verwendung von flexiblen Führungen nach einem der vorhergehenden Ansprüche, wobei die flexiblen Führungen (110), das Basisbefestigungssystem (107) und das höhenvariable Basissystem (114, 242) ein flexibles Führungssystem (115, 208) bilden, ferner Folgendes umfassend:
ein Positionierungssystem (142, 210, 1110), wobei sich das Positionierungssystem (142, 210, 1110) von dem höhenvariablen Basissystem (114, 242) erstreckt und so ausgelegt ist, dass es mit einer Gruppe von Elementen (144) für die Struktur (102) verbunden ist, um das flexible Führungssystem (115, 208) in einer gewünschten Position (146) auf der Struktur (102) zu positionieren, damit Herstellungsvorgänge (108) ordnungsgemäß durchgeführt werden können, vorzugsweise
wobei die Gruppe von Elementen (144) eine Gruppe von Fensteröffnungen (148) in der Struktur (102) umfasst, wobei das Positionierungssystem (142, 210, 1110) eine Gruppe von Fensterzapfen (150) und Verbindungsstiften (152) umfasst, die die Gruppe von Fensterzapfen (150) mit dem höhenvariablen Basissystem (114, 242) verbinden, und wobei die flexible Führung (110, 134) eine gewünschte Position (146) auf der Oberfläche (120) der Struktur (102) aufweist, wenn die Gruppe von Fensterzapfen (150) mit der Gruppe von Fensteröffnungen (148) verbunden ist,
und/oder
wobei es sich bei dem Basisbefestigungssystem (107) um ein Saugnapfsystem (112) handelt und wobei das Positionierungssystem (142) eine Unterstützung für die flexiblen Führungen (110) bereitstellt, falls ein Unterdruckverlust in dem Saugnapfsystem (112) auftritt, während das Saugnapfsystem (112) an der Oberfläche (120) der Struktur (102) befestigt ist.

8. Herstellungssystem (105, 106, 202, 1102) unter Verwendung von flexiblen Führungen nach einem der vorhergehenden Ansprüche, wobei die flexiblen Führungen (110), das Basisbefestigungssystem (107) und das höhenvariable Basissystem (114, 242) ein flexibles Führungssystem (115, 208) bilden, vorzugsweise ferner Folgendes umfassend:
eine Anzahl von Führungsklemmen (168), die mit den Gerüstelementen (126) verbunden sind, die mit den Basen (124) und den flexiblen Führungen (110, 134) verbunden sind, wobei die Anzahl von Führungsklemmen (168) ausgelegt ist, um ein strukturelles Gerüstelement (170) an die Struktur (102) zu klemmen.

9. Verfahren zum Installieren eines Systems (105) unter Verwendung von flexiblen Führungen, wie in einem der vorhergehenden Ansprüche beschrieben, wobei das Verfahren Folgendes umfasst:
Auswählen mindestens einer von einer Anzahl von Höhen (111) oder einer Anzahl von Winkeln (122) für ein höhenvariables Basissystem (121), das ein Basisbefestigungssystem (107) und flexible Führungen (110) in dem flexiblen Führungssystem (115) miteinander verbindet, wobei mindestens eine aus der Vielzahl von Höhen (111) oder der Anzahl von Winkeln (122) für das höhenvariable Basissystem (121) mindestens einen gewünschten Abstand (118) zwischen den flexiblen Führungen (110) und einer Oberfläche (120) einer Struktur (102) aufrechterhält, an der das Basisbefestigungssystem (107) an den flexiblen Führungen (110) befestigt ist, so dass jede flexible Führung (134) unter der Vielzahl von flexiblen Führungen (110) die Tatsache kompensiert, dass sich die Kontur (128) lokal nicht in einer Ebene parallel zu der jeder flexiblen Führung (134) erstrecken kann,
wobei die Struktur (102) aus einer Gruppe ausgewählt werden kann, die eine Baugruppe, eine Unterbaugruppe, einen Rumpfabschnitt, einen Flügel, einen Flügelkasten, einen horizontalen Stabilisator, ein Fahrwerkssystem, ein Hydrauliksystem, eine Hautplatte, einen Stringer, einen Rumpfabschnitt, einen Verbund-Rumpfabschnitt und andere geeignete Strukturen umfasst, und
Befestigen des flexiblen Führungssystems (115) an der Oberfläche (120) der Struktur (102), wobei in einer Auslegung von mindestens einem von dem höhenvariablen Basissystem (121) oder dem Basisbefestigungssystem (107) die flexiblen Führungen (110) strukturelle Gerüstelemente (197) auf der Oberfläche (120) der Struktur (102) überbrücken können.

10. Verfahren nach Anspruch 9, wobei das Befestigen des flexiblen Führungssystems (115) an der Oberfläche (120) der Struktur (102) Folgendes umfasst:
Installieren von Spreizstäben (160) zwischen einer ersten flexiblen Führung (156) unter den flexiblen Führungen (110) und einer zweiten flexiblen Führung (158) unter den flexiblen Führungen (110), wobei die Spreizstäbe (160) eine Verbindungsstelle (101, 455) zwischen der ersten flexiblen Führung (156) und der zweiten flexiblen Führung (158) überbrücken.

11. Verfahren nach Anspruch 9 oder 10, wobei das Befestigen des flexiblen Führungssystems (115) an der Oberfläche (120) der Struktur (102) Folgendes umfasst:
Befestigen des flexiblen Führungssystems (115) an der Oberfläche (120) der Struktur (102) auf einer inneren Formlinienseite (171) der Struktur (102) oder einer äußeren Formlinienseite (177) der Struktur (102).

12. Verfahren nach einem der Ansprüche 9 bis 11, wobei es sich bei dem Basisbefestigungssystem (107) um ein Saugnapfsystem (112) handelt und wobei das Befestigen des flexiblen Führungssystems (115) an der Struktur (102) Folgendes umfasst:
Anlegen eines Unterdrucks (113) an das Saugnapfsystem (112), so dass das Saugnapfsystem (112) an der Oberfläche (120) der Struktur (102) befestigt wird.

13. Verfahren nach Anspruch 12, wobei das Befestigen des flexiblen Führungssystems (115) an der Struktur (102) ferner Folgendes umfasst:
Befestigen des flexiblen Führungssystems (115) an einer Gruppe von Elementen (144) auf der Struktur (102), um das flexible Führungssystem (115) an einer gewünschten Position (146) auf der Struktur (102) zu befestigen.

14. Verfahren nach Anspruch 13, wobei es sich bei der Gruppe von Elementen (144) um eine Gruppe von Fensteröffnungen (148) in der Struktur (102) handelt, und wobei der Befestigungsschritt Folgendes umfasst:
Installieren einer Gruppe von Fensterzapfen (150) in die Gruppe von Fensteröffnungen (148) in der Struktur (102);
Positionieren des flexiblen Führungssystems (115) relativ zu der Gruppe von Fensterzapfen (150); und
Verbinden des flexiblen Führungssystems (115) mit der Gruppe von Fensterzapfen (150).

15. Verfahren nach Anspruch 14, wobei das Verbinden des flexiblen Führungssystems (115) mit der Gruppe von Fensterzapfen (150) Folgendes umfasst:
Verbinden von Verbindungsstiften (152) mit Gerüstelementen (126) des höhenvariablen Basissystems (121) in ersten Führungen des flexiblen Führungssystems (115) und der Gruppe von Fensterzapfen (150).

## Revendications

1. Système de fabrication employant des glissières (105, 106, 202, 1102), comprenant :
des glissières flexibles (110),
un système de fixation d'embases (107),
une structure (102), choisie dans un groupe comprenant un ensemble, un sous-ensemble, une section de fuselage, une aile, un caisson de voilure, un stabilisateur horizontal, un système de train d'atterrissage, un système hydraulique, un panneau de revêtement, une lisse, une section de fuselage, une section de fuselage composite et d'autres structures appropriées, et
un système à embases (121) reliant le système de fixation d'embases (107) et les glissières flexibles (110) entre eux, ledit système à embases (121) maintenant une distance souhaitée (118) entre les glissières flexibles (110) et une surface (120) de la structure (102) à laquelle le système de fixation d'embases (107) est fixé, et ledit système à embases (121) permettant aux glissières flexibles (110) de survoler des éléments d'ossature structurels (197, 273) présents sur la surface (120) de la structure (102) ;
ledit système à embases (121) comprenant :
un système à embases à hauteur variable (114, 242) reliant le système de fixation d'embases (107) et les glissières flexibles (110) entre eux, ledit système à embases à hauteur variable (114, 242) ayant des hauteurs (116) choisies pour maintenir ladite distance souhaitée (118) entre les glissières flexibles (110) et la surface (120) de la structure (102) à laquelle est fixé le système de fixation d'embases (107).

2. Système de fabrication employant des glissières (105, 106, 202, 1102) selon la revendication 1, dans lequel les glissières flexibles (110) comprennent :
une première glissière flexible (156, 236), et
une deuxième glissière flexible (158, 238), ladite deuxième glissière flexible (158, 238) étant parallèle à ladite première glissière flexible (156, 236) et lesdites première glissière flexible (156, 236) et deuxième glissière flexible (158, 238) étant positionnées parallèlement à une épissure (101, 455) de la structure (102).

3. Système de fabrication employant des glissières (105, 106, 202, 1102) selon la revendication 1 ou 2, dans lequel le système à embases à hauteur variable (114, 242) comprend :
une pluralité d'embases (124) dont les hauteurs (111) sont choisies pour maintenir les glissières flexibles (110) à la distance souhaitée (118) de la surface (120) de la structure (102) de telle manière que les glissières flexibles (110) suivent le contour (128) de la structure (102).

4. Système de fabrication employant des glissières (105, 106, 202, 1102) selon la revendication 3, dans lequel chaque embase (13) de la pluralité d'embases (124) est conçue pour définir un angle (132) relatif à chaque glissière flexible (134) de la pluralité de glissières flexibles (110) reliée à chaque embase (13) de telle manière que chaque glissière flexible (110, 134) compense le fait que le contour (128) peut, de manière localisée, ne pas s'étendre dans un plan parallèle à celui de chaque glissière flexible (134), ladite structure (102) étant de préférence une section de fuselage dont le rayon (457) diminue et les angles (122) formés entre les embases (124) et les glissières flexibles (110) augmentent à mesure que le rayon (457) diminue.

5. Système de fabrication employant des glissières (105, 106, 202, 1102) selon la revendication 4, dans lequel le système à embases à hauteur variable (114, 242) comprend en outre :
des éléments d'ossature (126) reliés à la pluralité d'embases (124) et à la pluralité de glissières flexibles (110, 134), la pluralité d'embases (124) étant reliées au système de fixation d'embases (107),
un élément d'ossature (140) parmi les éléments d'ossature (126) étant de préférence relié de manière rotative à l'embase (13) pour régler l'angle (132) relatif à chaque glissière flexible (134) reliée à l'élément d'ossature (140), permettant à chaque glissière flexible (134) de compenser le fait que le contour (128) peut, de manière localisée, ne pas s'étendre dans un plan parallèle à celui de chaque glissière flexible (134).

6. Système de fabrication employant des glissières (105, 106, 202, 1102) selon la revendication 5, dans lequel chaque embase (13) a une extrémité inclinée (138) reliée à l'élément d'ossature (140), ladite extrémité inclinée (138) présentant ledit angle (132) qui permet à chaque glissière flexible (134) de compenser le fait que le contour (128) peut, de manière localisée, ne pas s'étendre dans un plan parallèle à celui de chaque glissière flexible (134).

7. Système de fabrication employant des glissières (105, 106, 202, 1102) selon l'une quelconque des revendications précédentes, dans lequel les glissières flexibles (110), le système de fixation d'embases (107) et le système à embases à hauteur variable (114, 242) forment un système à glissières flexibles (115, 208), et comprenant en outre :
un système de positionnement (142, 210, 1110), le système de positionnement (142, 210, 1110) s'étendant à partir du système à embases à hauteur variable (114, 242) et étant conçu pour être relié à un groupe d'éléments (144) destinés à la structure (102) pour permettre de positionner le système à glissières flexibles (115, 208) dans une position souhaitée (146) sur la structure (102) pour permettre la bonne réalisation des opérations de fabrication (108),
ledit groupe d'éléments (144) comprenant de préférence un groupe d'ouvertures de fenêtre (148) présentes dans la structure (102), ledit système de positionnement (142, 210, 1110) comprenant un groupe de bouchons de fenêtre (150) et de broches de liaison (152) qui relient le groupe de bouchons de fenêtre (150) au système à embases à hauteur variable (114, 242), et ladite glissière flexible (110, 134) ayant une position souhaitée (146) sur la surface (120) de la structure (102) lorsque le groupe de bouchons de fenêtre (150) est relié au groupe d'ouvertures de fenêtre (148),
et/ou
ledit système de fixation d'embases (107) étant un système à ventouses (112) et ledit système de positionnement (142) assurant un support pour les glissières flexibles (110) en cas de perte de dépression dans le système à ventouses (112) pendant que le système à ventouses (112) est fixé à la surface (120) de la structure (102).

8. Système de fabrication employant des glissières (105, 106, 202, 1102) selon l'une quelconque des revendications précédentes, dans lequel les glissières flexibles (110), le système de fixation d'embases (107) et le système à embases à hauteur variable (114, 242) forment un système à glissières flexibles (115, 208), et comprenant de préférence en outre :
un certain nombre de pinces à glissière (168) relié aux éléments d'ossature (126) reliés aux embases (124) et aux glissières flexibles (110, 134), ledit certain nombre de pinces à glissière (168) étant conçu pour pincer un élément d'ossature structurel (170) présent sur la structure (102).

9. Procédé d'installation d'un système à glissières flexibles (115), mentionné dans l'une quelconque des revendications précédentes, le procédé comprenant les opérations consistant à :
choisir un certain nombre de hauteurs (111) et/ou un certain nombre d'angles (122) relatifs à un système à embases à hauteur variable (121) qui relie un système de fixation d'embases (107) et des glissières flexibles (110) du système à glissières flexibles (115) entre eux, ledit certain nombre de hauteurs (111) et/ou ledit certain nombre d'angles (122) relatifs au système à embases à hauteur variable (121) maintenant au moins une distance souhaitée (118) entre les glissières flexibles (110) et une surface (120) d'une structure (102) à laquelle les glissières flexibles (110) sont fixées par le biais du système de fixation d'embases (107), de telle manière que chaque glissière flexible (134) de la pluralité de glissières flexibles (110) compense le fait que le contour (128) peut, de manière localisée, ne pas s'étendre dans un plan parallèle à celui de chaque glissière flexible (134),
laquelle structure (102) peut être choisie dans un groupe comprenant un ensemble, un sous-ensemble, une section de fuselage, une aile, un caisson de voilure, un stabilisateur horizontal, un système de train d'atterrissage, un système hydraulique, un panneau de revêtement, une lisse, une section de fuselage, une section de fuselage composite et d'autres structures appropriées, et
la fixation du système à glissières flexibles (115) à la surface (120) de la structure (102), étant entendu que, dans une configuration du système à embases à hauteur variable (121) et/ou du système de fixation d'embases (107), cela permet aux glissières flexibles (110) de survoler les éléments d'ossature structurels (197) présents sur la surface (120) de la structure (102).

10. Procédé selon la revendication 9, dans lequel la fixation du système à glissières flexibles (115) à la surface (120) de la structure (102) comprend :
installer des barres d'écartement (160) entre une première glissière flexible (156) parmi les glissières flexibles (110) et une deuxième glissière flexible (158) parmi les glissières flexibles (110), lesdites barres d'écartement (160) survolant une épissure (101, 455) entre la première glissière flexible (156) et la deuxième glissière flexible (158).

11. Procédé selon la revendication 9 ou 10, dans lequel la fixation du système à glissières flexibles (115) à la surface (120) de la structure (102) comprend :
la fixation du système à glissières flexibles (115) à la surface (120) de la structure (102) sur un côté de plan de joint intérieur (171) de la structure (102) ou un côté de plan de joint extérieur (177) de la structure (102).

12. Procédé selon l'une quelconque des revendications 9 à 11, dans lequel le système de fixation d'embases (107) est un système à ventouses (112) et dans lequel la fixation du système à glissières flexibles (115) à la structure (102) comprend :
l'application d'une dépression (113) sur le système à ventouses (112) de telle manière que le système à ventouses (112) soit fixé à la surface (120) de la structure (102).

13. Procédé selon la revendication 12, dans lequel la fixation du système à glissières flexibles (115) à la structure (102) comprend en outre :
la fixation du système à glissières flexibles (115) à un groupe d'éléments (144) présents sur la structure (102) pour fixer le système à glissières flexibles (115) à une position souhaitée (146) sur la structure (102).

14. Procédé selon la revendication 13, dans lequel le groupe d'éléments (144) est un groupe d'ouvertures de fenêtre (148) présentes dans la structure (102), et dans lequel l'étape de fixation comprend :
l'installation d'un groupe de bouchons de fenêtre (150) dans le groupe d'ouvertures de fenêtre (148) présentes dans la structure (102),
le positionnement du système à glissières flexibles (115) par rapport au groupe de bouchons de fenêtre (150), et
la liaison du système à glissières flexibles (115) au groupe de bouchons de fenêtre (150).

15. Procédé selon la revendication 14, dans lequel la liaison du système à glissières flexibles (115) au groupe de bouchons de fenêtre (150) comprend :
la liaison de broches de liaison (152) aux éléments d'ossature (126) du système à embases à hauteur variable (121) de premières glissières du système à glissières flexibles (115) et au groupe de bouchons de fenêtre (150).
